# EUROPEAN PATENT APPLICATION

(11) **EP 4 842 113 A1**
(43) Date of publication of application: **18.11.2026**
(21) Application number: 25738978.3
(22) Date of filing: 09.01.2025
(51) Int. Cl.: H04W 72/20, H04L 5/00, H04L 1/1607, H04W 28/06, H04W 52/02, H04W 84/12, H04W 74/00

(54) **METHOD AND APPARATUS FOR BITMAP-BASED BLOCK SCHEDULING IN ULTRA WIDEBAND WIRELESS NETWORK SYSTEM**

(30) Priority: 10.01.2024 KR 20240004395; 22.02.2024 KR 20240025986; 27.08.2024 KR 20240115396
(71) Applicant: LG Electronics Inc., Yeongdeungpo-gu Seoul 07336 (KR)
(72) Inventor: LEE, Hongwon, Seoul 06772 (KR); CHOI, Jinsoo, Seoul 06772 (KR); CHO, Hangyu, Seoul 06772 (KR); JANG, Insun, Seoul 06772 (KR)
(74) Representative: Plasseraud IP
(86) International application number: PCT/KR2025/000470
(87) International publication number: WO 2025/150905

(57) **Abstract**

A method and an apparatus for bitmap-based block scheduling in an ultra wideband wireless network system are disclosed. The method according to one embodiment of the present disclosure may comprise steps in which a first device: generates a scheduling information element (IE) including an extended bitmap length field and a bitmap field; and transmits the scheduling IE to a second device. The length of the bitmap field can be based on the value of the extended bitmap length field. The extended bitmap length field can include a bitmap length field having a bit size that exceeds 2.

## Description

### [TECHNICAL FIELD]

The present disclosure relates to a bitmap-based block scheduling method and apparatus in an ultra-wideband wireless network system.

### [BACKGROUND ART]

A low-rate (LR) wireless networks may support low data rate connectivity between fixed or mobile devices having limited battery consumption requirements. For example, a LR wireless network may be applied to a wireless personal area network (WPAN). The Institute of Electrical and Electronics Engineers (IEEE) 802.15.4 standard defines various technologies for a physical layer (PHY) and a medium access control (MAC) sublayer for a LR wireless network. For example, the IEEE 802.15.4 standard defines various modes that support precise ranging.

An ultra wideband (UWB) wireless network may support transmitting massive information at low power over a very wide band (e.g., a frequency band of 3.1GHz-10.6GHz). For example, an UWB technology may support transmitting digital sign information wirelessly by converting it into an impulse signal with a very short time duration below a nanosecond. The IEEE 802.15.4z standard defines an ultra wideband (UWB) technology related to the ranging technology. For example, the IEEE 802.15.4z standard includes a high-rate pulse frequency (HRP) PHY technology that supports high-speed data communication (e.g., 27-31 Mbps) and accurate two-way ranging and positioning, and a high-rate pulse frequency (LRP) PHY technology that supports various modes for low-speed data communication (e.g., a Radio Frequency Identification (RFID) application). Furthermore, the IEEE 802.15.4z standard includes an UWB PHY technology that refines the integrity and accuracy of ranging measurement, and a MAC technology that supports the exchange of ranging-related information between devices participating in ranging and the control of a time-of-flight (TOF) ranging procedure. Recently, the IEEE 802.15.4ab standard for the advancement of an UWB PHY/MAC including the refinement of the IEEE 802.15.4z standard-based wireless network technology is under discussion.

### [Disclosure]

### [Technical Problem]

A technical problem of the present disclosure is to provide a bitmap-based block scheduling method and apparatus in a UWB wireless network system.

An additional technical problem of the present disclosure is to provide a method and an apparatus for reducing overhead in bitmap-based block scheduling that supports a hyper block-based mode in a UWB wireless network system.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include generating, by a first device, a scheduling information element (IE) including an extended bitmap length field and a bitmap field; and transmitting, by the first device to a second device, a control message including the scheduling IE. A length of the bitmap field may be based on a value of the extended bitmap length field. The extended bitmap length field may include a bitmap length field having a bit size greater than 2.

A method according to an additional aspect of the present disclosure may include receiving, from a first device by a second device, a control message including a scheduling information element (IE) including an extended bitmap length field and a bitmap field; and performing signal transmission or reception, by the second device, in a block scheduled to the second device based on a bitmap of the bitmap field. A length of the bitmap field may be based on a value of the extended bitmap length field. The extended bitmap length field may include a bitmap length field having a bit size greater than 2.

### [Technical Effects]

According to the present disclosure, a bitmap-based block scheduling method and apparatus in a UWB wireless network system may be provided.

According to the present disclosure, a method and an apparatus for reducing overhead in bitmap-based block scheduling that supports a hyper block-based mode in a UWB wireless network system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram for describing a HRP UWB PPDU format to which the present disclosure may be applied.
FIG. 3 is a diagram for describing the configuration of a HRP UWB PPDU STS packet structure to which the present disclosure may be applied.
FIG. 4 is a diagram for describing two-way ranging techniques to which the present disclosure may be applied.
FIG. 5 is a diagram for describing examples of a format of a RMI IE, a RCPCS IE, a RRMC IE and a RRTI IE to which the present disclosure may be applied.
FIG. 6 shows an example of a message sequence chart for SS-TWR applying a deferred reply time result to which the present disclosure may be applied.
FIG. 7 shows an example of a message sequence chart for SS-TWR applying an embedded reply time result to which the present disclosure may be applied.
FIG. 8 shows an example of a message sequence chart for SS-TWR using a SP3 packet to which the present disclosure may be applied.
FIG. 9 shows an example of a message sequence chart for DS-TWR to which deferred reply time information to which the present disclosure may be applied is applied.
FIG. 10 shows an example of a message sequence chart for DS-TWR to which embedded ranging time information to which the present disclosure may be applied is applied.
FIG. 11 is a diagram for describing the role of a device in a ranging procedure to which the present disclosure may be applied.
FIG. 12 shows examples of ARC IE, RDM IE, RBU IE, RR IE and SRRE IE formats to which the present disclosure may be applied.
FIG. 13 is a diagram for describing a ranging block structure and a ranging phase to which the present disclosure may be applied.
FIG. 14 shows examples of a timing diagram for various multi-device ranging to which the present disclosure may be applied.
FIG. 15 shows a timing diagram in an example of a block-based mode to which the present disclosure may be applied.
FIG. 16 is a diagram for describing examples of various transmission offsets to which the present disclosure may be applied.
FIG. 17 shows an example of a message sequence chart for one-to-many SS-TWR to which the present disclosure may be applied.
FIG. 18 shows an example of a message sequence chart for SP3 one-to-many SS-TWR to which the present disclosure may be applied.
FIG. 19 represents an example of a time structure in a hyper block-based mode according to the present disclosure.
FIG. 20 is a diagram representing an example of an HBS IE format according to the present disclosure.
FIG. 21 is a diagram representing an example of a scheduling IE format according to the present disclosure.
FIG. 22 is a diagram for describing the operation of the first device according to the present disclosure.
FIG. 23 is a diagram for describing the operation of the second device according to the present disclosure.
FIG. 24 is a diagram representing various examples of a scheduling list element within a scheduling IE according to the present disclosure.
FIG. 25 is a diagram representing an example of an operation that uses a bitmap-based block scheduling IE in a hyper block-based mode according to the present disclosure.
FIG. 26 is a diagram representing an example of an operation that uses a bitmap-based block scheduling IE in a block-based mode according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The examples of the present disclosure may be applied to various wireless communication systems. For example, the examples of the present disclosure may be applied to an IEEE 802.15 standard-based wireless network (e.g., Zigbee, Bluetooth, etc.). In particular, the examples of the present disclosure may be applied to an IEEE 802.15.4 standard-based wireless network, and further, may be applied to a newly proposed IEEE 802.15.4ab standard-based UWB wireless network, or a next-generation UWB wireless network after IEEE 802.15.4ab. A wireless communication system to which the examples of the present disclosure are applied is not limited to a wireless network of the IEEE 802.15 series, and may be applied to a wireless local area network (WLAN) technology or a Wi-Fi technology of the IEEE 802.11 series, and may be applied to a cellular wireless communication system (e.g., a technology of the Long Term Evolution (LTE) series of the 3rd Generation Partnership Project (3GPP) standard and a 5G New Radio (NR)).

The IEEE 802.15.4ab standard including a technology for further advancing an UWB PHY/MAC is under discussion. For example, in the IEEE 802.15.4ab standard, additional coding, a preamble and a modulation technique for supporting improved link budget and/or reduced air-time; an additional channel and operating frequency; an interference reduction technology to support higher device density and higher traffic use cases; improvement of accuracy, precision, reliability and interoperability for high-integrity ranging; a technique for reducing complexity and power consumption; definition of a hybrid operation with narrowband signaling to support an UWB; refined native discovery and connection setup mechanism; a sensing capability for supporting presence detection and environment mapping; a mechanism supporting high data-rate streaming allowing a minimum throughput of 50Mbps as well as low-power and low-latency streaming; support for peer-to-peer, peer-to-multi-peer, station-to-infrastructure protocol and infrastructure synchronization mechanism, etc. are discussed.

Hereinafter, technical features to which examples of the present disclosure may be applied will be described.

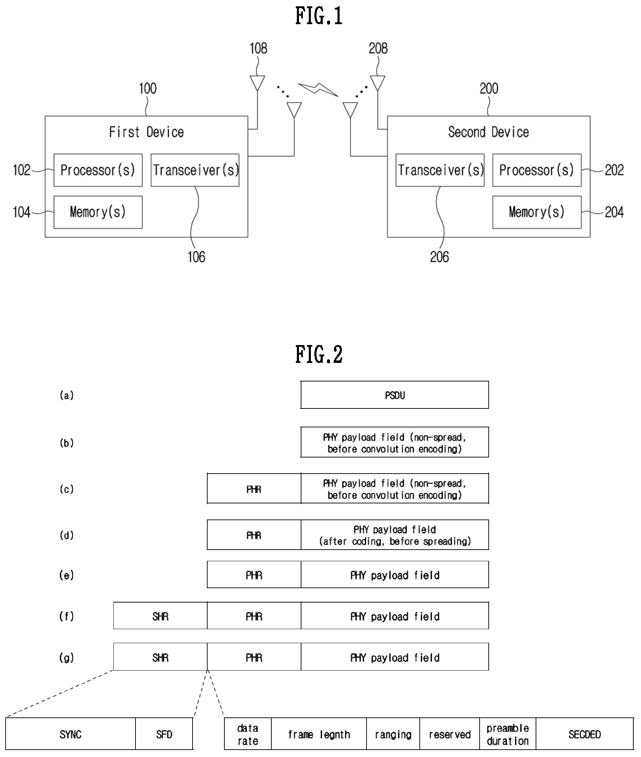

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

When devices 100 and 200) illustrated in FIG. 1 support ranging, it may be called a ranging-capable device (RDEV) or an enhanced ranging-capable device (ERDEV). For example, devices 100 and 200 illustrated in FIG. 1 may be called various terms such as a transmitting device, a receiving device, a transmitting RDEV, a receiving RDEV, a transmitting ERDEV, a receiving ERDEV, etc. For example, devices 110 and 200 may be called an initiator, a responder, an originator, a recipient, a controller, a controlee, etc. according to a role in a ranging operation. The role of one device is not fixed, but may be relatively determined according to a relationship with other devices. When one device interacts with multiple devices, one device may play multiple roles.

Referring to FIG. 1, the first device 100 and the second device 200 may transmit and receive a wireless signal through various UWB wireless network technologies (e.g., IEEE 802.15.4 series). The first device 100 and the second device 200 may include an interface for a medium access control (MAC) layer and a physical layer (PHY) that follow the regulations of the IEEE 802.15.4 standard. The IEEE 802.15.4-based PHY and MAC are included in an UWB subsystem, and an UWB subsystem may further include an UWB command interface (UCI) corresponding to an interface between an UWB controller and a host. An UWB subsystem may exchange a message with a host system through an UCI.

In addition, the first device 100 and the second device 200 may additionally support various communication standards (e.g., IEEE 802.15 series, IEEE 802.11 series, 3GPP LTE series, 5G NR series standards, etc.) technologies other than UWB wireless network technology. In addition, the device of the present disclosure may be implemented in various devices such as a mobile phone, a vehicle, a personal computer, augmented reality (AR) equipment, and virtual reality (VR) equipment, etc. In addition, the device of the present specification may support various communication services such as a voice call, a video call, data communication, autonomous-driving, machine-type communication (MTC), machine-to-machine (M2M), device-to-device (D2D), IoT (Internet-of-Things), etc.

The first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement an UWB wireless network technology (e.g., IEEE 802.15.4 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

The second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement an UWB wireless network technology (e.g., IEEE 802.15.4 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, the transceivers 106 and 206 of FIG. 1 may perform a transmission and reception operation of a signal (e.g., a packet or a physical layer protocol data unit (PPDU) conforming to IEEE 802.15.4, etc.). In addition, in the present disclosure, an operation in which various devices generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields included in the PPDU, 2) determining / configuring / acquiring time resources or frequency resources used for fields included in the PPDU; 3) determining / configuring / acquiring a specific sequence used for fields included in the PPDU action, 4) power control operation and/or power saving operation applied to a device, 5) operations related to ACK signal determination/acquisition/configuration/calculation/decoding/encoding, etc. In addition, in the following example, various information (e.g., information related to fields / subfields / control fields / parameters / power, etc.) used by various devices to determine / acquire / configure / calculate / decode / encode transmission and reception signals may be stored in the memories 104 and 204 of FIG. 1.

In an UWB band, a device may perform medium access based on a Carrier Sense Multiple Access with Collision Avoidance (CSMA/CA) mechanism. A CSMA/CA mechanism may perform Clear Channel Assessment (CCA) that senses a wireless channel or medium for a predetermined time duration before a device starts transmission. Sensing may be performed, for example, by an energy detection (ED) method based on a predetermined threshold. As a result of sensing, if a medium is determined to be in an idle status, transmission is started through a corresponding medium. On the other hand, when a medium is detected to be occupied or busy, a device may attempt transmission after setting a delay period for medium access (e.g., a random backoff period) and waiting without starting transmission. By applying a random backoff period, multiple devices are expected to attempt transmission after waiting for a different time, so collision may be minimized.

In addition, when a superframe structure is applied, a slotted CSMA-CA mechanism may be applied to data transmission in the contention access period (CAP) of an active portion between the active portion and the inactive portion of an interval between beacons. A CSMA-CA mechanism may not be applied to data transmission in an active portion and in a contention free period (CFP). When a superframe structure is not applied, an unslotted CSMA-CA mechanism may be applied to the transmission of all data frames excluding an ACK frame for a data request command.

### Ranging Measurement

Ranging includes distance measurement between two devices, and a device having a ranging capability may be referred to as a ranging-capable device (RDEV) or an enhanced ranging-capable device (ERDEV).

FIG. 2 is a diagram for describing a HRP UWB PPDU format to which the present disclosure may be applied.

FIGS. 2(a) to 2(g) show the encoding process of a HRP UWB PPDU. Through an encoding process, a HRP UWB PPDU having a format including a synchronization header (SHR), a PHY header (PHR) and a PHY payload field may be generated.

FIG. 2(a) shows a PHY service data unit (PSDU) received from a MAC through a PHY service access point (SAP). A PSDU may include a MAC PDU.

In FIG. 2(b), Reed-Solomon encoding may be applied to a PSDU, generating a PHY payload field. A PHY payload field in FIG. 2(b) is non-spread, and corresponds to a status before convolution encoding is applied.

In FIG. 2(c), a PHR field may be added in front of a PHY payload field. A PHR field may have a size of 19 bits of bit 0 to bit 18. For example, bit 0-1 may correspond to a data rate field, bit 2-8 may correspond to a frame length field, bit 9 may correspond to a ranging field, bit 10 may be reserved, bit 11-12 may correspond to a preamble duration field and bit 13-18 may correspond to a single error correct, double error detect (SECDED) field. A data rate field may indicate a data rate value applied to a PHY payload field. A frame length field may indicate the length of a PSDU. A ranging field may indicate whether a corresponding frame is a ranging frame (RFRAME). A preamble duration field may indicate the length (symbol unit) of the SYNC field of a SHR.

In FIG. 2(d), convolution encoding may be applied to generate a coded PHY payload field, and spreading may be applied to a PHY payload field in FIG. 2(e).

In FIG. 2(f), a SHR may be added in front of a PHR. A SHR field may include a SYNC field (or a preamble code) and a start-of-frame delimiter (SFD) field.

In FIG. 2(g), modulation is applied to SHR, PHR and PHY payload fields, and a PPDU encoding procedure is terminated. A basic coding rate may be applied to a SHR field. The burst position modulation-binary phase shift keying (BPM-BPSK) at a coding rate of 850kb/s or 110kb/s may be applied to a PHR field. BPM-BPSK at a coding rate indicated in a PHR may be applied to a PHY payload field. For example,

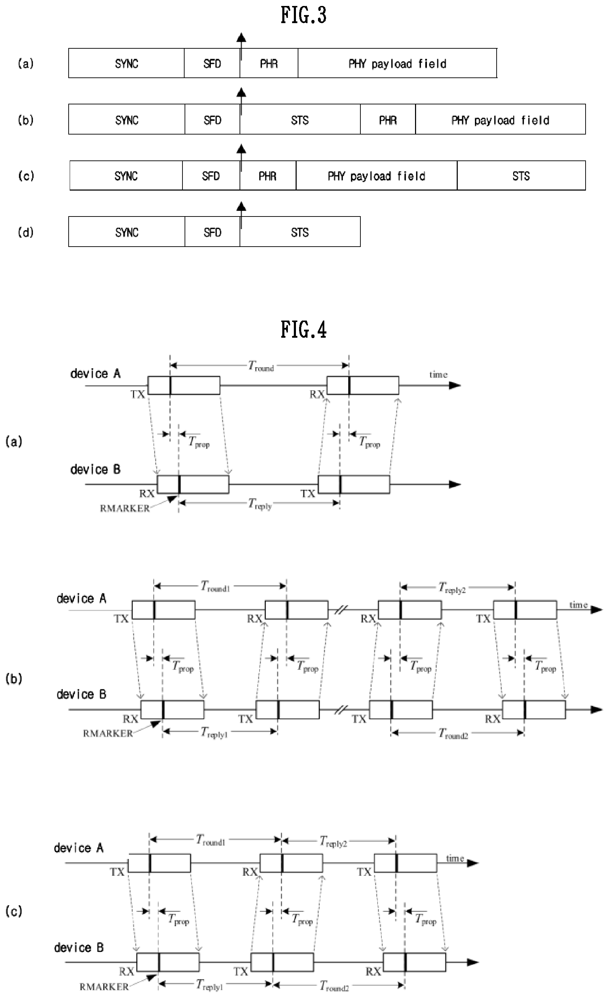

FIG. 3 is a diagram for describing the configuration of a HRP UWB PPDU STS packet structure to which the present disclosure may be applied.

A scrambled timestamp sequence (STS) field may include a sequence of pseudo-randomized pulses. For example, a STS may include a sequence of advanced encryption standard (AES)-128-based pseudo-randomized pulses, and may be utilized for accurate localization in the localization technology based on the spread spectrum technology in UWB communication.

A PPDU STS packet structure configuration may be different according to whether a STS field is included and its location.

FIG. 3(a) shows a format corresponding to STS packet configuration 0 (i.e., a STS field does not exist in a PPDU). This format may be defined in a mandatory way.

FIG. 3(b) shows a format corresponding to STS packet configuration 1 (i.e., a STS field is located immediately after a SFD field and before a PHR field). This format may be defined in a mandatory way.

FIG. 3(c) shows a format corresponding to STS packet configuration 2 (i.e., a STS field is located after a PHY payload field). This format may be defined in an optional way.

FIG. 3(d) shows a format corresponding to STS packet configuration 3 (i.e., a STS field is located immediately after a SFD field, a PHR field does not exist, and a data field (i.e., a PHY payload field) does not exist). This format may be defined in a mandatory way.

A PPDU format like examples in FIG. 3 may be referred to as a HRP-ERDEV PPDU format. In FIG. 3, an arrow indicates a ranging marker (RMARKER) reference position in each format. RMARKER may be a reference for timestamp measurement or ranging counter.

For example, RMARKER may be defined as a time at which the start of the first symbol following the SFD of RFRAME is at a local antenna. The next higher layer may estimate a relative clock offset between local reference clocks on a remote transmitting end and a receiving end based on the reporting of a SRMARKER receiving ranging counter value for at least one STS segment.

A ranging counter supported by RDEV corresponds to a set of behavioral properties and capabilities of a RDEV calculating a ranging counter value. A ranging counter value is an unsigned integer, and may be defined as a length of at least 32 bits. The unit of a ranging counter is defined as 2⁻⁷ of a 499.2MHz chipping period for a HRP UWB PHY, and is approximately 15.65 picoseconds(ps), and is defined as 20⁻²⁰ of a 1MHz basic chipping rate for a LRP UWB PHY, and is approximately 0.9537ps.

A ranging capability may be enabled in a RDEV by using a MAC common part sublayer (MCPS)-DATA.request primitive and a MAC sublayer management entity (MLME)-RX-ENABLE.request primitive. A primitive may mean a set of instructions or parameters exchanged between sublayer entities or layers within one device. For example, an originator may request a ranging capability through a MCPS-DATA.request primitive, and a ranging capability may be enabled in a recipient through a MLME-RX-ENABLE.request primitive.

### Ranging and Localization Method

The ranging and localization methods supported by RDEVs and ERDEVs may be based on a time-stamping capability. As a time-based technique, single-sided two-way ranging (SS-TWR), double-sided two-way ranging (DS-TWR), and one-way ranging/time difference of arrival (OWR/TDOA) are described below.

FIG. 4 is a diagram for describing two-way ranging techniques to which the present disclosure may be applied.

In the example of FIG. 4(a), SS-TWR includes the measurement of the round-trip delay of a single message from one device to another device and a response sent to a sending device. Device A initiates message exchange, device B sends a response, and T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation. [Equation 1] ${\hat{T}}_{prop} = \frac{1}{2} \left({T}_{round}-{T}_{reply}\right)$

When a device may estimate a relative clock offset between itself and a remote device, the accuracy of TOF may be improved by the following equation. [Equation 2] ${\hat{T}}_{prop} = \frac{1}{2} \left({T}_{round}-{T}_{reply}-\left(1-{C}_{offs}\right)\right)$

Here, C_offs corresponds to a value obtained after the receiver of device A measures a relative clock offset between itself and the transmitter of remote device B.

In the example of FIG. 4(b), DS-TWR corresponds to the extension of SS-TWR, and two round-trip times may be used and combined to calculate a TOF result by reducing an error for a case where an uncorrected clock frequency offset exists although a response delay is long. Device A initiates the first round-trip time measurement, and device B responds to it, and then device B initiates the second round-trip time measurement, and device A responds to it, so the entire DS-TWR exchange may be completed. T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation. [Equation 3] ${\hat{T}}_{prop} = \frac{\left({T}_{round 1}\times {T}_{round 2}-{T}_{reply 1}\times {T}_{reply 2}\right)}{\left({T}_{round 1}+{T}_{round 2}+{T}_{reply 1}+{T}_{reply 2}\right)}$

The example of FIG. 4(c) corresponds to the reduction of DS-TWR through four messages in FIG. 4(b) to three messages. In other words, the response of the first round-trip time measurement may be used as the initiation message of the second round-trip time measurement.

Next, a TDOA method is described. TDOA corresponds to a technique for locating a wireless device (e.g., a radio frequency identification (RFID) device) based on the relative arrival time of a single message or multiple messages. OWR may be used for TDOA. There are two cases of TDOA. In one case, a message is periodically broadcast by a mobile device, and a time at which a broadcast message arrives at multiple fixed nodes synchronized in a predetermined manner may be compared. Generally, a message transmitted by a mobile device may be referred to as a blink. In another case, multiple synchronized nodes may sequentially broadcast a message according to a transmission time offset known to each other. For any pair of fixed synchronized nodes, a difference in the arrival time of blinks in the first case, or a difference in the arrival time of broadcast messages received by a mobile device in the second case locates a mobile device on a hyperbolic surface. By combining results from such multiple pairs, an intersection point between sets of hyperbolic surfaces may be derived, and accordingly, the location of a mobile device may be specified. In the second case, a transmission offset may be considered when calculating a difference in the arrival time of messages from synchronized nodes.

RFID devices may typically use the shortest blink message as much as possible (e.g., a multipurpose frame) to reduce power consumption. A multipurpose frame may be 12 octets long, and may include a short frame control field and a sequence number field, and may not include a destination address field, an extended source address field and a frame check sequence (FCS).

The synchronization of fixed nodes may be performed by the wired distribution of clock signals, and a wireless synchronization technique may be applied. The UWB messages (and known/pre-measured TOF) transmitted between fixed nodes may be used to calculate a relative clock frequency offset and a drift between fixed nodes. This information may be used to correct the arrival time of blink messages based on a common time, making TDOA data meaningful.

### Set-up Procedure before Ranging Exchange

In order to reduce power consumption, disabling ranging may be defined as a default status. Enabling ranging in all RDEVs participating in TWR exchange may be performed by a higher layer. In addition, when an optional capability is used, it may be assumed that predetermined coordination for preamble and channel selection is performed before TWR exchange.

### Finish-up Procedure after Ranging Exchange

At the end of TWR exchange, each device may have transmit (TX) and receive (RX) ranging counter values related to round-trip time measurement or reply time. In order to calculate TOF, all of these values are required in a node where calculation is performed. For this purpose, out-of-band (OOB) signaling, a custom message, a ranging measurement information (RMI) information element (IE), etc. may be used.

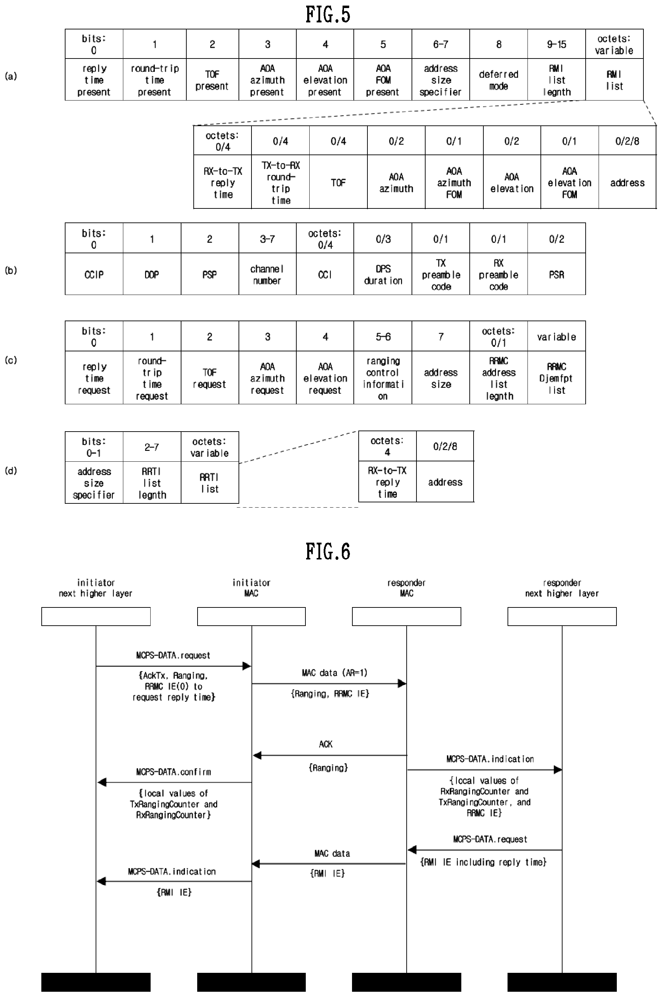

FIG. 5 is a diagram for describing examples of a format of a RMI IE, a RCPCS IE, a RRMC IE and a RRTI IE to which the present disclosure may be applied.

FIG. 5(a) shows an example of a RMI IE format.

A RMI IE may be used to send at least one ranging-related measurement to at least one device. A RMI IE content field may have the same format as the example of FIG. 5(a).

1, a value of a reply time present field, may indicate that a RX-to-TX (or TX-to-RX) reply time field is present in each RMI list element, and a value of 0 may indicate that it is not present. A RX-to-TX (or TX-to-RX) reply time may correspond to T_reply described by referring to FIG. 4.

1, a value of a round-trip time present field, may indicate that a TX-to-RX round-trip time field is present in each RMI list element, and a value of 0 may indicate that it is not present. A TX-to-RX round-trip time may correspond to T_round described by referring to FIG. 4.

1, a value of a TOF present field, may indicate that a TOF field is present in each RMI list element, and a value of 0 may indicate that it is not present.

1, a value of an AOA azimuth present field, may indicate that an AOA azimuth field is present in each RMI list element, and a value of 0 may indicate that it is not present.

1, a value of an AOA elevation present field, may indicate that an AOA elevation field is present in each RMI list element, and a value of 0 may indicate that it is not present.

1, a value of an AOA figure of merit (FOM) present field, may indicate that an AOA azimuth FOM field is present in each RMI list element when an AOA azimuth field is present, and may indicate that an AOA elevation FOM field is present in each RMI list element when an AOA elevation field is present, and a value of 0 may indicate that an AOA azimuth FOM field or an AOA elevation FOM field is not present.

An address size specifier field may specify the size of addresses used in a RMI list field (e.g., 2 or 8).

0, a value of a deferred mode field, may indicate that a corresponding RMI IE is embedded into RFRAME, and a value of 1 may indicate that a corresponding RMI IE is included in a deferred message transmitted in the next measurement report phase.

A RMI list length field may specify the number of elements of a RMI list field. Fields included in a RMI list field are as shown in FIG. 5(a).

FIG. 5(b) shows an example of a RCPCS IE format.

A ranging channel and preamble code selection (RCPCS) IE may be used to indicate channel selection for dynamic preamble code and channel selection (DPS) and/or selection of a TX/RX preamble code. DPS may include changing a long preamble to protect against an attacking device intercepting ranging. A RCPCS IE content field may have the same format as the example of FIG. 5(b).

1, a value of a CCI present (CCIP) field, may indicate that a CCI field is present, and a value of 0 may indicate that it is not present.

1, a value of a DPS Duration Present (DDP) field, may indicate that a DPS duration field is present, and a value of 0 may indicate that it is not present.

1, a value of a preamble sequence selection present (PSP) field, may indicate that preamble sequence selection fields, i.e., a TX preamble code field, a RX preamble code field and a preamble symbol repetitions (PSR) field, are present, and a value of 0 may indicate that they are not present.

A channel number field may indicate an UWB channel number for forthcoming ranging exchange.

A channel configuration interval (CCI) field may specify a channel configuration interval. A channel configuration interval may correspond to a time in the unit of a ranging scheduling time unit (RSTU) between the transmission of a corresponding IE and reconfiguration for a specified channel.

A RSTU corresponds to 416 chips (approximately 833.33ns) (416 chips = 416 / 499.2*106) for a HRP UWB PHY. A RSTU corresponds to 1 microsecond (us) (= 1 chip at a 1MHz basic chipping rate) for a LRP UWB PHY.

A DPS duration field may specify the effective time duration of DPS. A corresponding duration may be specified in the unit of a RSTU for an ERDEV and in the unit of a symbol for a non-ERDEV.

A TX preamble code field may indicate a DPS preamble code that will be used for transmission during the forthcoming ranging exchange on a side transmitting a corresponding IE.

A RX preamble code field may indicate a DPS preamble code that will be used for reception during the forthcoming ranging exchange on a side transmitting a corresponding IE.

A PSR field may indicate the number of preamble symbol repetitions that will be used for the SYNC of each RFRAME of the forthcoming ranging exchange.

A MLMR-DPS.request and MLME-DPS.confirm primitive may be applied to the optional DPS mode of ranging. The ConfigTime parameter of a MLME-DPS.request primitive may be used to specify a future time to which a preamble code and/or a channel number will be applied. A time to which a DPS change will be applied may be exchanged through the CCI field of a RCPCS IE.

### Basic Ranging Exchange

A recipient may turn on or enable ranging in a MAC on a recipient side based on a MLME-RX-ENABLE.request primitive from the next higher layer.

After ranging is turned on in a MAC on a recipient side (i.e., receiving a MLME-RX-ENABLE.request primitive), all received RFRAMEs may generate a TX/RX ranging counter.

An originator may transmit data to a recipient based on a MCPS-DATA.request primitive.

A recipient may generate a ranging report for all RFRAMEs and transmit an ACK frame to an originator.

An originator may enable Tx-to-Rx turnaround (i.e., repeat data transmission and ACK reception) by receiving an ACK frame from a recipient. In this regard, the next higher layer may not be involved.

A ranging report may include the issue of a MCPS-DATA.confirm primitive on an originator side (i.e., reporting the result of invoking a MCPS-DATA.request primitive) and the issue of a MCPS-DATA.indication primitive on a recipient side (i.e., indicating the reception of data from an originator, or indicating that ranging information according to the reception of a packet from an originator is available).

Until ranging is disabled, the generation of the ranging report of a recipient, the transmission of ACK to an originator, the enabling of Tx-to-Rx turnaround based on the reception of the ACK frame of an originator and a ranging report may be repeated.

### Ranging Procedure

First, the control of ranging and the transmission (transfer) of results are described.

A measurement value may be exchanged between RDEVs to complete ToF calculation. For this purpose, TWR may be controlled through information elements and ranging data may be exchanged between RDEVs.

Specifically, information elements may be used for the control of TWR and the transmission of ranging data between RDEVs participating in ranging exchange. For various ranging methods, according to a required use case, a measurement result by both devices may be combined to complete TOF calculation between RDEVs participating in ranging exchange. In other words, one device may transmit its ranging measurement result to another device. Information elements may be specified to provide a mechanism for controlling TWR and support the transmission of ranging information between devices participating in ranging exchange. In order to ensure the integrity of corresponding information transmission, a secure private data communication capability may be used.

Hereinafter, a ranging procedure for SS-TWR that applies a deferred reply time result is described.

FIG. 6 shows an example of a message sequence chart for SS-TWR applying a deferred reply time result to which the present disclosure may be applied.

In a message sequence chart for ranging exchange, RRMC IE(0) may represent a RRMC IE including a ranging control information field with a value of 0 (i.e., a ranging initiation message for SS-TWR). The Acknowledgment Request (AR) field of a MAC header may represent whether ACK is requested.

The next higher layer of an initiator may have sufficient information for calculating TOF between devices by using the above-described equation at a time when receiving a RMI IE (e.g., FIG. 5(a)).

The ranging exchange initiation of an initiator may invoke a MCPS-DATA.request primitive to request ranging reply time information and transmit a ranging frame including a Ranging Request Measurement and Control (RRMC) information element including a ranging control information field.

FIG. 5(c) shows an example of a RRMC IE format.

A RRMC IE may transmit a ranging request and include information controlling a ranging procedure.

The reply time request, round-trip time request, TOF request, AOA azimuth request and AOA elevation request fields of a RRMC IE format may indicate that corresponding information is requested when that value is 1 and may indicate that corresponding information is not requested when that value is 0.

A ranging control information field may indicate that a corresponding frame is a ranging initiation message for SS-TWR when that value is 0, that a corresponding frame is a response to a ranging initiation message for SS-TWR when that value is 1, that a corresponding frame is a ranging initiation message for DS-TWR when that value is 2 and that a corresponding frame is continuing DS-TWR and initiates the second round-trip time measurement when that value is 3.

A address size field may specify the size of addresses used in a RRMC address list field. When the value of an address size field is 0, all addresses of a RRMC address list element may correspond to a short address. When the value of an address size field is 1, all addresses of a RRMC address list element may correspond to an extended address.

A RRMC address list length field may indicate the number of addresses of a RRMC address list field. When an address is not provided (e.g., for unicast ranging where a target device may be identified by a destination address in a MAC header (MHR)), a RRMC address list length field may be omitted.

When a RRMC IE is a broadcast message, and when a transmitter wants to receive a response to a ranging request from all devices, RRMC address list length and RRMC address list fields may be omitted. Alternatively, when a transmitter wants to receive a response to a ranging request from specific devices (or a device set), RRMC address list length and RRMC address list fields may be used to select a device set for a response.

For SS-TWR, since an initiator generally calculates TOF, a responder may request a TOF result by setting the TOF request field of a RRMC IE included in a response message.

For DS-TWR, since a responder generally calculates TOF, an initiator may request a TOF result by including a RRMC IE in two messages transmitted to perform DS-TWR exchange.

When an initiator requests different information from multiple responders, multiple RRMC IEs may be included in one broadcast message.

A RRMC address list field may include a list of addresses for which a RRMC IE heads.

In relation to a ranging report (or a response ranging frame), an initiator side may complete round-trip time measurement, and a MCPS-DATA.confirm primitive may provide an initiator side with a ranging report defining a round-trip time. On a recipient side, a MCPS-DATA.indication primitive may provide a ranging report on a response side defining a reply time for round-trip time measurement.

FIG. 5(d) shows an example of a Ranging Reply Time Instantaneous (RRTI) IE format.

In association with at least one frame including a RRMC IE where a reply time request field is set as 1, a RRTI IE may be included in a corresponding response frame to transmit the reply time of a response frame.

An address size specifier field may be defined as in the following table.

**[Table 1]**

| A value of an address size specifier field | Address Size |
|---|---|
| 00 | 0 Octet, no address |
| 01 | Reserved |
| 10 | 2 Octets, short address (16 bits) |
| 11 | 8 Octets, extended address (64 bits) |

A RRTI list length field may indicate the number of elements in a RRTI list field. A RRTI list field may include RRTI list elements.

The RX-to-TX reply time field of a RRTI list field may be set as a value indicating a difference between the transmission time of a response RFRAME including a RRTI IE and a reference time specified by a higher layer (i.e., T_reply in the example of FIG. 4(a)). A reference time may correspond to the reception time (based on RMARKER) of RFRAME including a RRMC IE where a reply time request field is set as 1.

The address field of a RRTI list field may be set as the address of a device transmitting a RRMC IE requesting a reply time. An address field may be omitted in unicast ranging. In scheduled multi-node ranging, when the reply time of other RDEVs are negotiated in advance and the order is determined, an address field may be omitted.

Hereinafter, a ranging procedure for SS-TWR that applies an embedded reply time result is described.

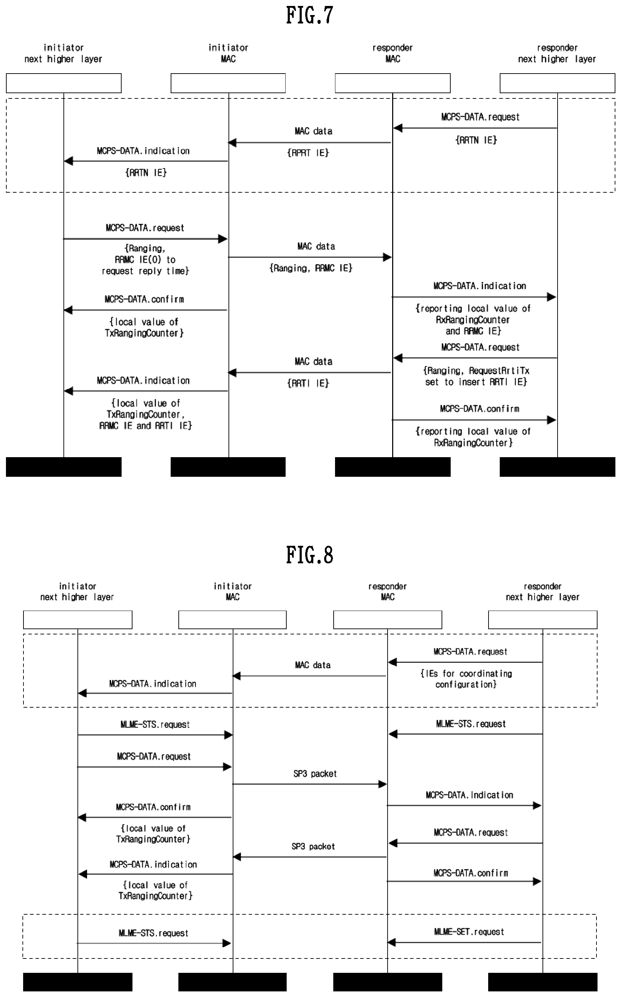

FIG. 7 shows an example of a message sequence chart for SS-TWR applying an embedded reply time result to which the present disclosure may be applied.

For SS-TWR applying a reply time result, ranging exchange may be initiated by a ranging frame requesting ranging reply time information and including a RRMC IE where a ranging control information field is set as 0. A responding device may complete round-trip measurement by transmitting a response frame including an embedded ranging reply time instantaneous (RRTI) IE. When a device has a capability to generate a RRTI IE, the number of messages required for ranging measurement may be minimized, so power may be saved. However, it may take time to calculate the arrival time of a received ranging message and prepare a RRTI IE value. In some cases, this time may be known a priori in an OOB manner, and a ranging reply time negotiation (RRTN) IE may provide a device with a mechanism that indicates a preferred reply time, i.e., a time required to prepare a frame including a RRTI IE. When this time is known, a ranging initiating device may expect a response message after a specific time, and may save energy by delaying turning on a receiver until then. This may be applied to both SS-TWR and DS-TWR ranging exchanges.

In FIG. 7, RRMC IE(0) represents a RRMC IE including a ranging control information field with a value of 0. The communication of a RRTN IE in a box indicated with dotted lines may be performed at any convenient time before ranging exchange is initiated, or preferred reply time information may be pre-known or exchanged through OOB. When receiving a MCPS-DATA.indication primitive including the RRTI IE of a responder, the next higher layer of an initiator may have sufficient information to calculate TOF between two devices according to the above-described equation.

Hereinafter, a ranging procedure for SS-TWR to which a fixed reply time is applied is described.

FIG. 8 shows an example of a message sequence chart for SS-TWR using a SP3 (scrambled timestamp sequence packet configuration option three) packet to which the present disclosure may be applied.

When a responding device is capable of precise control over the transmission time of its response message to the arrival time of a ranging initiation message, a reply time (i.e., Treply) may have a fixed known value agreed between devices participating in ranging exchange. In this case, it may not be required to embed Treply in a response message or to transmit it separately in an additional message. The accuracy of resulting ranging may depend on how much precise control a responding device has over the transmission time of its response message. For example, each 1 ns error in TOF may correspond to a ranging error of about 30cm.

HRP-ERDEV PPDU format SP3 may be used for a fixed reply time.

In the example of FIG. 8, an initiation message in a box indicated with dotted lines may represent communication for agreement and coordination for all other parameters required to allow communication to proceed and the use of a SP3 packet between devices. In the example of FIG. 8, only a single message is indicated, but there may be a series of messages in each direction for an agreement on all parameters. For example, a RRNT IE may be used to agree on a fixed reply time.

In each device, the next higher layer may configure a SP3 packet format in all devices, and may appropriately configure an operation by using a MLME-STS.request primitive in order to set a personal area network information base (PIB) attribute (e.g., phyHrpUwbStsKey, phyHrpUwbStsVCounter, phyHrpUwbStsVUpper96, etc.). When a higher layer selects a SP3 packet configuration, subsequent MCPS-DATA primitives are related to a SP3 packet until a higher layer uses a MLME-STS.request primitive to change a packet configuration.

A MCPS-DATA.request primitive may be used to initiate ranging exchange, and in a corresponding mode, a PPDU may not convey MAC data. Although not shown, it may be assumed that the invocation of a MLME-RXENABLE.request primitive turns on a receiver at an appropriate time to receive a PPDU. Since a PHY is configured for a SP3 packet, a PHY may notify a MAC layer of the reception of a PPDU at the end of a scrambled timestamp sequence (STS), and a MAC similarly aware of a SP3 configuration may deliver the RxRangingCounter value of a RangingReportDescriptor parameter of a MCPS-DATA.indication primitive. In addition, when it is assumed that the RangingStsFom of RangingReportDescriptor is acceptable, a higher layer may initiate a response by invoking a MCPS-DATA.request primitive specifying RangingTxTime according to an agreed fixed reply time.

When a SP3 packet response is received in an initiating device, and it is assumed again that the RangingStsFom of the RangingReportDescriptor parameter of a MCPS-DATA.indication primitive is acceptable, an initiator side may have sufficient information to calculate TOF between devices according to the above-described equation based on a known fixed reply time.

Ranging exchange may be repeated multiple times until higher layers are mutually agreed. In order to resume PHY and MAC data interactions, the next higher layer may use a MLME-STS.request primitive to restore a STS packet configuration to a value that allows such data interactions. It is shown in a box indicated with final dotted lines in FIG. 8.

A LRP-ERDEV may also support challenge-response ranging to which a fixed reply time is applied in order to remove the need for a data message to convey a reply time.

Hereinafter, a DS-TWR ranging procedure to which deferred reply time information is applied is described.

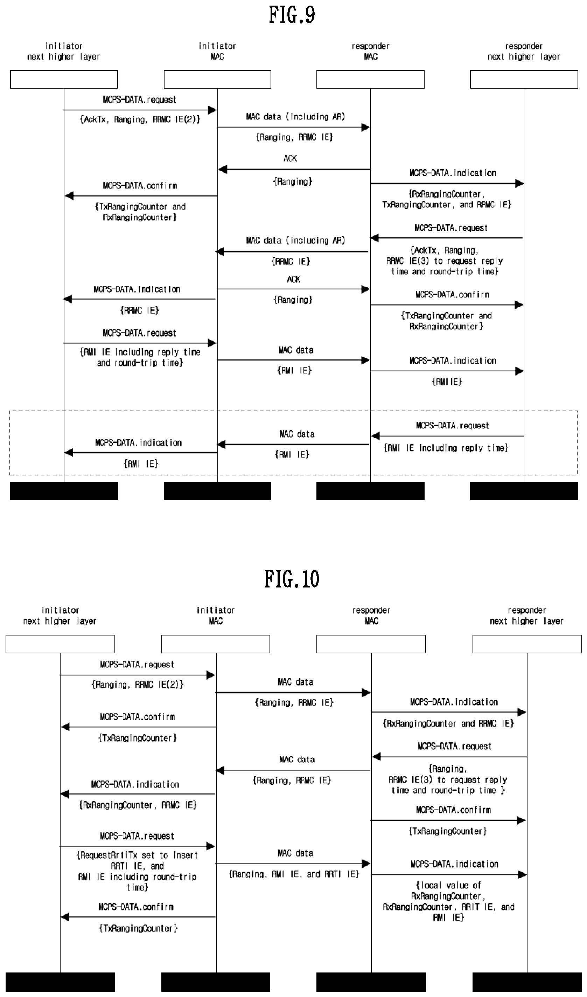

FIG. 9 shows an example of a message sequence chart for DS-TWR to which deferred reply time information to which the present disclosure may be applied is applied.

DS-TWR may essentially include the completion of SS-TWR exchange initiated in each device, and a combination of its results. DS-TWR may be initiated by the next higher layer transmitting a ranging data frame conveying a RRMC IE (i.e., RRMC IE(2)) where the value of a ranging control information field is set as 2. This frame and its ACK may define the first round-trip time measurement. The delivery of a RRMC IE in a MCPS-DATA.indication primitive may be notified to the next higher layer to initiate the second round-trip time measurement by the transmission of a data frame in another direction. This data frame may include a RRMC IE (i.e., RRMC IE(3)) where the value of a ranging control information field is set as 3 to indicate the continuation of exchange, and both reply time request and round-trip time request fields may be set as 1 to request a reply time and the result of the first round-trip time measurement. ACK for this message may complete the second round-trip time measurement. A subsequent message from an initiator may convey the first round-trip time measurement result and the reply time of the second round-trip time measurement through a RMI IE. When receiving a MCPS-DATA.indication primitive (including a RMI IE), a responder may have sufficient information to calculate TOF between devices according to the above-described equation. The subsequent reporting of a ranging result to an initiator side by using a RMI IE may be performed according to the value of the TOF request field of an initiating RRMC IE.

Hereinafter, a DS-TWR ranging procedure that applies embedded ranging time information is described.

FIG. 10 shows an example of a message sequence chart for DS-TWR to which embedded ranging time information to which the present disclosure may be applied is applied.

For 3-message DS-TWR exchange in FIG. 4(c) described above, it is required that an initiator side may embed a reply time as a part of the completion of the second round-trip time measurement. In the example of FIG. 10, DS-TWR may be initiated by RFRAME conveying a RRMC IE (i.e., RRMC IE(2)) where a TOF request field is set as 0 (i.e., an initiator side does not request ranging report) and a ranging control information field is set as 2.

A responder side may complete the first round-trip time measurement, and initiate the second measurement by using RFRAME conveying a RRMC IE (i.e., RRMC IE(3)) where a ranging control information field is set as 3 to indicate the continuation of exchange. In this RRMC IE, both reply time request and round-trip time request fields are set as 1, so the result of the first round-trip time measurement and a reply time for the second round-trip time measurement may be requested. An initiator may complete exchange by transmitting a final RFRAME that includes the result of the first round-trip time measurement in a RMI IE and the reply time of the second round-trip time measurement in a RRTI IE.

When receiving the MCPS-DATA.indication primitive that is a higher layer, a responder may have sufficient information to calculate TOF between devices according to the above-described equation. When the initiator of ranging exchange wants a corresponding result, an initiator may set the TOF request field of an initiating RRMC IE as a value requesting a responder side to send a result in the RMI IE of a subsequent message at the end of the exchange.

Hereinafter, a different procedure for the coordination of a RDEV and an ERDEV will be described.

For the successful interoperation of a HRP-ERDEV when a STS is used, a transmitter and a receiver need to be arranged for a seed (i.e., a STS key and data value V) used in the generation of a STS in a transmitter and used in the generation of a sequence for correlating with a STS received in a receiver. For the coordination of these values, a secure private data communication capability may be used, and a seed may be transmitted between devices by using a Ranging STS Key and Data (RKSD) IE. A counter value in a RSKD IE may relate to a current packet or a future packet as indicated by the current packet (CP) field of a corresponding IE. A higher layer may use received RSKD IE information and configure a STS seed appropriately for future packet transmission and reception (e.g., through a PIB attribute such as phyHrpUwbStsKey, phyHrpUwbStsVUpper96, phyHrpUwbStsVCounter, etc.). The header IE version of a RSKD IE may be used to synchronize a STS generator by using information transmitted with a secured payload IE and data.

When a frame including a RSKD IE header IE is received, a corresponding IE may be delivered to the next higher layer to set an attribute such as phyHrpUwbStsKey, phyHrpUwbStsVUpper96, phyHrpUwbStsVCounter, etc. appropriately for STS generation. When a frame including a RSKD IE header IE does not pass the incoming security processing, for example, when a receiver does not have a key to validate a message integrity code (MIC), a RSKD IE may be delivered to the next higher layer through the HeaderIeList parameter of a MLME-COMM-STATUS.indication primitive.

### Multi-node Ranging

Multi-node ranging may include ranging between at least two devices. Each device may perform a role in multi-node ranging.

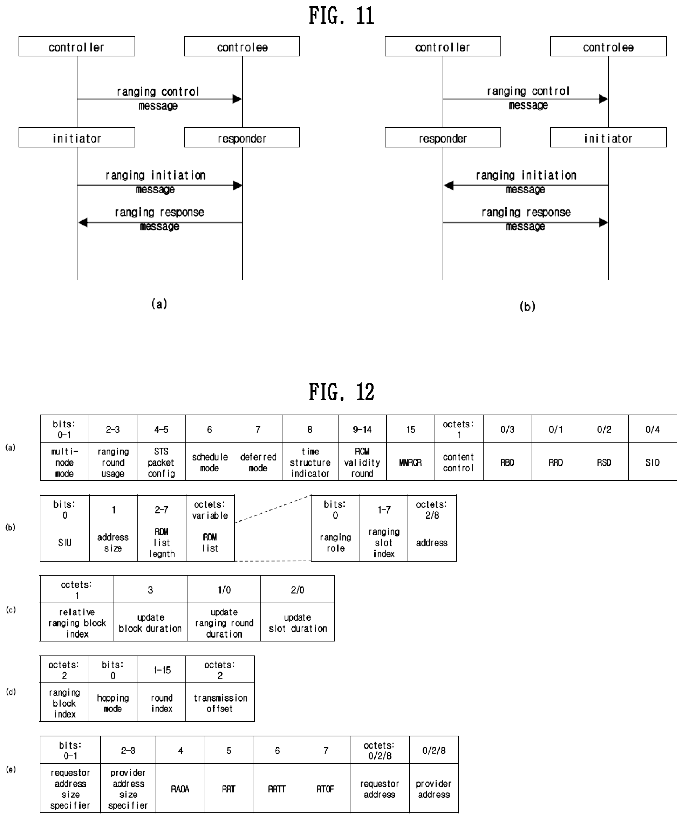

FIG. 11 is a diagram for describing the role of a device in a ranging procedure to which the present disclosure may be applied.

A controller may correspond to a ERDEV that transmits a ranging control message (RCM) and defines a ranging parameter. A RCM may correspond to a data frame including an advanced control (ARC) IE. A controlee may correspond to an ERDEV that uses a ranging parameter provided by a controller through a RCM. An initiator corresponds to an ERDEV that sends the first message of ranging after a RCM and initiates ranging exchange, and a controller or a controlee may be an initiator. A responder corresponds to an ERDEV that responds to a ranging initiation message received from an initiator, and a controller or a controlee may be a responder.

The next higher layer of a controller may determine a ranging parameter and the role of an ERDEV participating in ranging exchange (i.e., an initiator or a responder).

For example, FIG. 11(a) shows an example in which a controller transmitting a ranging control message (RCM) is an initiator transmitting a ranging initiation message in ranging exchange and a controlee receiving a RCM is a responder receiving a ranging initiation message and transmitting a ranging response message in ranging exchange. FIG. 11(b) shows an example in which a controller transmitting a RCM is a responder receiving a ranging initiation message and transmitting a ranging response message in ranging exchange and a controlee receiving a RCM is an initiator transmitting a ranging initiation message in ranging exchange.

A ranging session may be defined as a group of ERDEVs involved in a consecutive ranging procedure configured by the initial set of a ranging parameter. A ranging session may include only one controller and at least one initiator. A controller may configure an initial ranging parameter and update a parameter during a ranging session.

FIG. 12 shows examples of ARC IE, RDM IE, RBU IE, RR IE and SRRE IE formats to which the present disclosure may be applied.

FIG. 12(a) shows an example of a ARC IE format.

A controller may use an ARC IE to transmit ranging configuration information to a controlee. An ARC IE may be transmitted to one controller through a unicast frame and to a plurality of controllers through a broadcast frame.

A controlee may use an ARC IE to transmit its preferred ranging parameter to a controller together with a Ranging Change Request (RCR) IE.

Each field of an ARC IE may be defined as follows.

**[Table 2]**

| Value of multi-node mode field | Meaning |
|---|---|
| 0 | Single device-to-single device (unicast) |
| 1 | Multi-node one-to-many |
| 2 | Multi-node many-to-many |
| 3 | Reserved |

**[Table 3]**

| Value of ranging round usage field | Meaning |
|---|---|
| 0 | OWR(one-way ranging) |
| 1 | SS-TWR(single-sided two-way ranging) |
| 2 | DS-TWR(double-sided two-way ranging) |
| 3 | Ranging ancillary information exchange |

**[Table 4]**

| Value of STS packet configuration field | Resulting STS packet configuration |
|---|---|
| 0 | A STS field is not included in a PPDU (FIG. 3(a)). |
| 1 | STS Packet Structure #1 (FIG. 3(b)) |
| 2 | STS Packet Structure #2 (FIG. 3(c)) |
| 3 | STS Packet Structure #3 (FIG. 3(d)) |

**[Table 5]**

| Value of a schedule mode field | Selected ranging schedule mode and operation |
|---|---|
| 0 | Contention-based ranging is used for subsequent ranging rounds, and a RDM IE and a RCPS IE are used for control participation. |
| 1 | Scheduled-based ranging is used for subsequent ranging rounds, and participation in ranging and time slot allocation is fixed or controlled through the use of a RDM IE. |

A contention-based ranging type corresponds to a method in which a controller is unaware of the presence or number of controlees and accordingly, ERDEVs perform ranging in a contention-based manner. A collision may occur, so it may be required to filter an incorrect or wrong ranging result from a higher layer. An initiator or a responder may compete to perform transmission within an appropriate time slot. When an initiator and a responder compete, a ranging contention phase structure (RCPS) IE may be added to an ARC IE to designate a different phase (e.g., distinguished through a slot index) in a RCM. When a RCM is received, a controlee may know that it was selected to participate in a ranging round. A time-scheduled ranging type corresponds to a method in which a controller knows all controlees and designates the exact schedule of ranging transmission. A controller may select devices participating in ranging, give a ranging role (i.e., an initiator or a responder) and allocate a time slot through a ranging device management (RDM) IE. If the role and transmission schedule of a device are pre-designated by an OOB signaling method, etc., a RDM IE may be omitted.

**[Table 6]**

| Value of deferred mode field | Whether a deferred mode is allowed in measurement report |
|---|---|
| 0 | The round-trip measurement is completed immediately by embedding a |

| | RRTI IE in a response frame. |
|---|---|
| 1 | The round-trip time or reply time is reported in a measurement report phase. |

**[Table 7]**

| Value of time structure indicator field | Selected ranging time structure operation |
|---|---|
| 0 | A time structure is interval-based, and a RIU IE is used to control ranging interval update. |
| 1 | A time structure is block-based, and a RR IE is used to control ranging interval update. |

A RCM validity rounds field indicates the number of consecutive ranging rounds controlled by a RCM, which may be used to define a ranging round set. A multiple message receipt confirmation request (MMRCR) field may indicate whether multiple message receipt confirmation is requested.

A content control field may represent whether other fields are present in an ARC IE. Bits 0, 1, 2 and 3 of a content control field correspond to a field indicating whether a ranging block duration (RBD) field is present (i.e., RBDP), a field indicating whether a ranging round duration (RRD) field is present (i.e., RRDP), a field indicating whether a ranging slot duration (RSD) field is present (i.e., RSDP) and a field indicating whether a session ID field is present (i.e., SIP), respectively. Bits 4-7 of a content control field may be reserved.

A RBD field may indicate the duration (RSTU unit) of a ranging block.

A RRD field may indicate the duration of a ranging round (a ranging slot unit, i.e., the number of ranging slots in a ranging round).

A RSD field may indicate the duration (RSTU unit) of a ranging slot.

A SID field may indicate a unique identifier for each controller.

When a ranging block structure is the same as a previously specified duration, at least one of the duration fields (e.g., a RBD field, a RRD field, a RSD field) may not be present in the ACI IE of a current RCM. Even in this case, other fields (e.g., a schedule mode field, a STS packet configuration field, etc.) may be used to update a corresponding ranging parameter.

FIG. 12(b) shows an example of a ranging device management (RDM) IE format.

A RDM IE may be used to exchange scheduling information between ERDEVs for a set of ranging rounds designated in a RCM with the same controller.

A slot index usage (SIU) field may indicate whether to use the slot index of a RDM list element. When a value thereof is 0, a RDM IE may be used to allocate a ranging role (i.e., an initiator or a responder) to controlee(s) for contention-based ranging. When a value thereof is 1, a RDM IE may be used to allocate a time slot and allocate a ranging role to controlee(s) for scheduling-based ranging.

An address size field represents the size of an address used for a RDM list field, and 0 may indicate that a short address (16 bits) is used and 1 may indicate that an extended address (64 bits) is used.

A RDM list length field may indicate the number of RDM list elements.

The ranging role field of a RDM list may indicate an initiator or a responder. The ranging slot index field of a RDM list may indicate a slot index allocated to the device of a corresponding address. The address field of a RDM list may indicate the address of each device participating in ranging.

FIG. 12(c) shows an example of a ranging block update (RBU) IE format.

A RBU IE may be used by a controller to notify controlee(s) of an updated ranging block structure.

A relative ranging block index field may indicate the number of residual ranging blocks according to a current configuration before switching to a new configuration.

An updated block duration field may indicate the duration (RSTU unit) of a new ranging block.

An updated ranging round duration field may indicate a ranging round duration value that is an integer multiple of a ranging slot duration within a new ranging block structure.

An updated ranging slot duration may indicate the duration (RSTU unit) of a ranging slot within a new ranging block structure.

FIG. 12(d) shows an example of a ranging round (RR) IE format.

A ranging block index field may indicate the index of a ranging block.

A hopping mode field may indicate whether a hopping mode is supported for a ranging block.

A round index field may indicate a ranging round index within a ranging block.

A transmission offset field may indicate the value (RSTU unit) of the transmission offset of a ranging round within a block. A transmission offset may have a value obtained by subtracting a packet duration from the maximum value of a slot duration as the maximum value.

For a current ranging round (i.e., a ranging round in a ranging block with a block index of i), a RR IE may be included in the RCM of a ranging block with a block index of i. In this case, a RR IE may correspond to information that an ERDEV supports synchronization for a block structure.

For the next ranging round (i.e., a ranging round in the next ranging block with a block index of i+1), when the last message of a current ranging round (i.e., a ranging block with a block index of i) is transmitted from a controller to controlee(s), a RR IE may be transmitted in a final message to indicate ranging round information for a ranging block with a block index of i+1.

When the last message in a current ranging round (i.e., a ranging block with a block index of i) is transmitted from a controlee, a controller may transmit a RR IE in the RCM of the next ranging block with a block index of i+1 to indicate ranging round information for a ranging block with a block index of i+2.

In this case, a RCM in a ranging block with a block index of i+1 may include two RR IEs. One RR IE may be applied to the ranging round of a ranging block with a block index of i+1, and the other RR IE may be applied to the ranging round of a ranging block with a block index of i+2.

FIG. 12(e) shows an example of a SP3 ranging request reports (SRRR) IE format.

A SRRR IE may be used to request the report of AOA and/or reply time and/or round-trip time measurement from a requestor to a provider.

Each of a requestor address size specifier field and a provider address size specifier field may have a value of 00, 01, 10 and 11 as in Table 1 described above, and may indicate that an address is not present or that a short address (16 bits) or an extended address (64 bits) is used.

A report of AOA (RAOA) field may indicate whether report on AOA is requested.

A report of reply time (RRT) field may indicate whether report on a reply time is requested.

A report of round-trip time (RRTT) field may indicate whether report on a round-trip time is requested.

A report of TOF (RTOF) field may indicate whether report on TOF is requested.

A requestor address field may be set as the address of a device transmitting a signal where AOA is measured or initiating ranging.

A provider address field may be set as the address of a device measuring AOA.

### Ranging Block and Round Structure

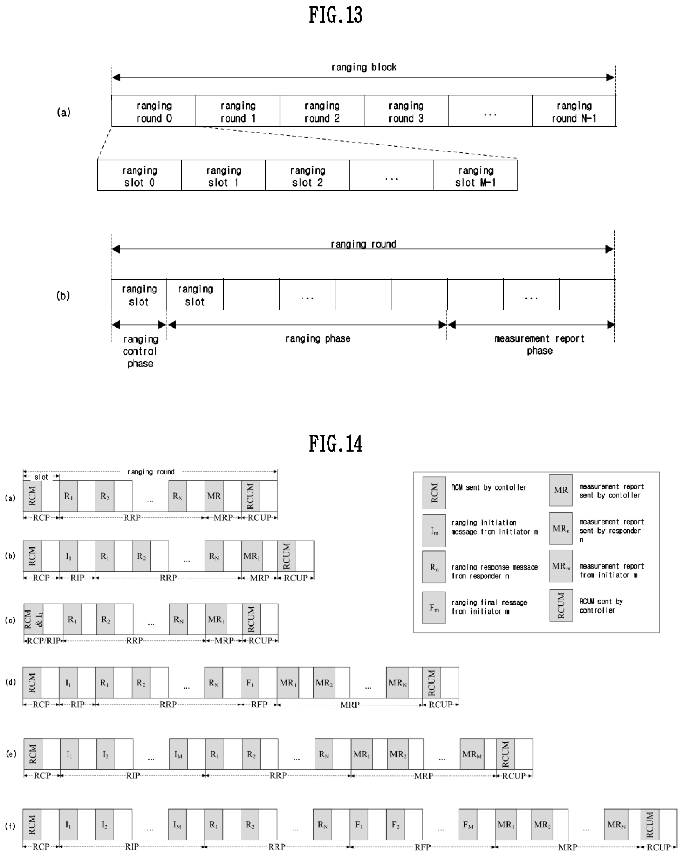

FIG. 13 is a diagram for describing a ranging block structure and a ranging phase to which the present disclosure may be applied.

In FIG. 13(a), a ranging block is a time duration for performing ranging, and one ranging block may include N ranging rounds.

A ranging round corresponds to a sufficient time for ERDEVs participating in ranging exchange to complete a ranging measurement cycle, and one ranging round may include M ranging slots.

A ranging slot may correspond to a time sufficient for transmission of at least one RFRAME.

The number of slots included in a slot duration and a ranging round may be different between ranging rounds. To this end, a controller may transmit a RCM that changes a ranging round configuration to controlee(s).

A ranging control message (RCM) is the first message transmitted by a controller, and may be transmitted in the first slot of a ranging round. A RCM may include configuration information for a ranging parameter.

A ranging control update message (RCUM) corresponds to a message transmitted by a controller in the last slot of ranging round(s) designated by a RCM in order to update a ranging parameter for the next ranging round(s). IE(s) included in a RCM for updating a ranging parameter may be included in a RCUM.

A ranging interval update message (RIUM) corresponds to a message transmitted by a controller to update an interval between ranging blocks and help synchronization between participating ERDEVs. A RCUM may include the scheduled time of the first RIUM, and a RIUM may include the scheduled time of the next RIUM (if used) before the start of the next ranging block.

FIG. 13(b) describes phases in a ranging procedure.

A ranging control phase (RCP) corresponds to a phase where a controller transmits a RCM.

A ranging phase (RP) may include a ranging initiation phase (RIP), a ranging response phase (RRP) and a ranging final phase (RFP).

A RIP corresponds to a phase where an initiator transmits ranging initiation message(s) to responder(s).

A RRP corresponds to a phase where responder(s) transmits response message(s) to an initiator.

A RFP corresponds to a phase where an initiator transmits ranging final message(s) to a responder, and may be used only in DS-TWR.

A measurement report phase (MRP) corresponds to a phase where participating ERDEVs exchange service information related to ranging measurement.

A ranging control update phase (RCUP) corresponds to a phase where a controller transmits a RCUM, and when a RCUP exists, a corresponding phase may be located in the last slot of the set of ranging rounds designated by a RCM.

A ranging interval update phase (RIUP) corresponds to a phase where a controller transmits a RIUM.

FIG. 14 shows examples of a timing diagram for various multi-device ranging to which the present disclosure may be applied.

FIG. 14(a) corresponds to the example of OWR, FIG. 14(b) corresponds to the example of SS-TWR, FIG. 14(c) corresponds to the example of the combination of a RCP and a RIP in SS-TWR, FIG. 14(d) corresponds to the example of DS-TWR, FIG. 14(e) corresponds to the example of many-to-many SS-TWR and FIG. 14(b) corresponds to the example of many-to-many DS-TWR.

Hereinafter, a ranging mode is described.

In an interval-based mode, the average time of ranging rounds is variable, and a time structure may be applied with adaptive spacing.

In a block-based mode, the average time of ranging rounds is constant. In other words, a ranging block with the same duration may be repeated in a block-based mode.

Ranging mode selection may be determined based on a time structure indicator field within an ARC IE or an OOB mechanism.

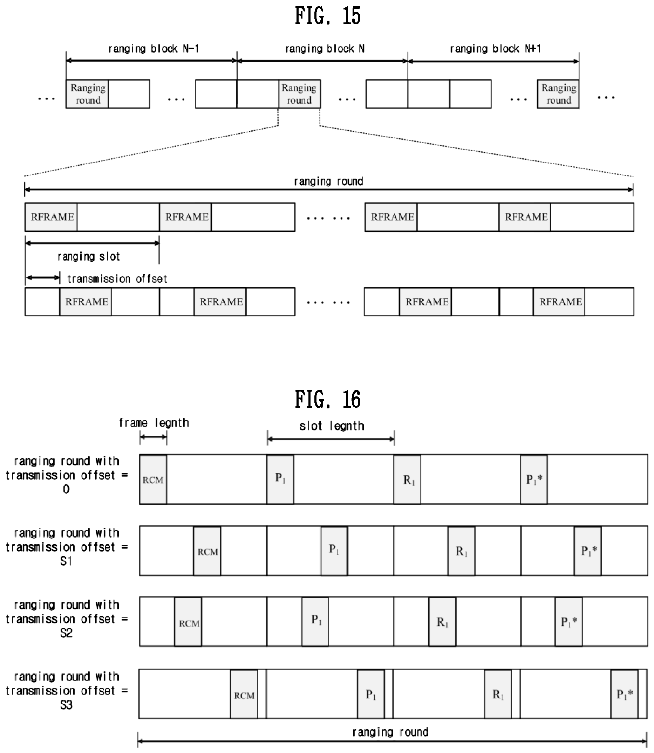

FIG. 15 shows a timing diagram in an example of a block-based mode to which the present disclosure may be applied.

In a block-based mode, a ranging block structure may use a structured timeline. A ranging block structure setup may include designating a ranging block duration (RBD), a ranging round duration (RRD) and a ranging slot duration (RSD) based on the corresponding field of an ARC IE.

The number of ranging rounds corresponds to a value obtained by dividing a ranging block duration by a ranging round duration.

The number of ranging slots corresponds to a value obtained by dividing a ranging round duration by a ranging slot duration.

An ERDEV receiving a RCM may set an associated timeline for ranging based on the value of fields in an initial ranging block structure and an ARC IE. A ranging block structure may be set up and/or fixed by the next higher layer.

A ranging block structure may be transmitted repeatedly by a controller for each RCM (e.g., through an ARC IE). When the change or update of a ranging block structure (i.e., a new ranging block duration, ranging round duration and/or ranging slot duration) is required, a controller may transmit a RBU IE for a new configuration. A RBU IE may be transmitted through a final data frame in a ranging message sequence or a RCM. Whenever a RBU IE is transmitted, a controller may decrease a relative ranging block index one by one until it becomes 0. Accordingly, it may be indicated whether a new configuration will be used in the next block and whether the RCM ARC IE of the next block includes a new configuration.

Hereinafter, indexing is described.

For a ranging block, a block index is given as 0 for the first ranging block, and a relative block index is determined for the remaining blocks by using block index 0 as a reference.

For a ranging round, when N ranging rounds are included in one ranging block, a round index is given as 0 for the first ranging round in a current ranging block, and a relative round index (e.g., 1, ..., M-1) is determined for the remaining N-1 rounds by using round index 0 as a reference.

For a ranging slot, when M ranging slots are included in one ranging round, a slot index is given as 0 for the first ranging slot in a current ranging round, and a relative slot index (e.g., 1, ..., M-1) is determined for the remaining M-1 slots by using slot index 0 as a reference.

The new ranging message exchange may be transmitted/received as the first RCM in the ranging slot with index 0 of the ranging round with index 0 of a ranging block with index 0. In other words, a RCM packet may be transmitted at the start of the first ranging slot of the first ranging round. A RCM may include a RR IE to inform information associated with ranging rounds within a current ranging block.

FIG. 16 is a diagram for describing examples of various transmission offsets to which the present disclosure may be applied.

A RR IE included in a RCM may include transmission offset information as information associated with a ranging round within a current ranging block. In subsequent ranging rounds, a controller may start transmission in each slot based on a different transmission offset. A transmission offset may have a value obtained by subtracting an UWB packet duration from a ranging slot duration. A transmission offset may be expressed as a multiple of a RSTU.

A transmission offset may be applied to a ranging round. In other words, the same transmission offset may be applied to all packet transmissions included in the same ranging round. In the next higher layer of a controller, a transmission offset may be selected and communicated to all other devices through a RR IE. A controller may also change a transmission offset for each ranging round based on power that reduces interference.

### One-to-many Ranging Procedure

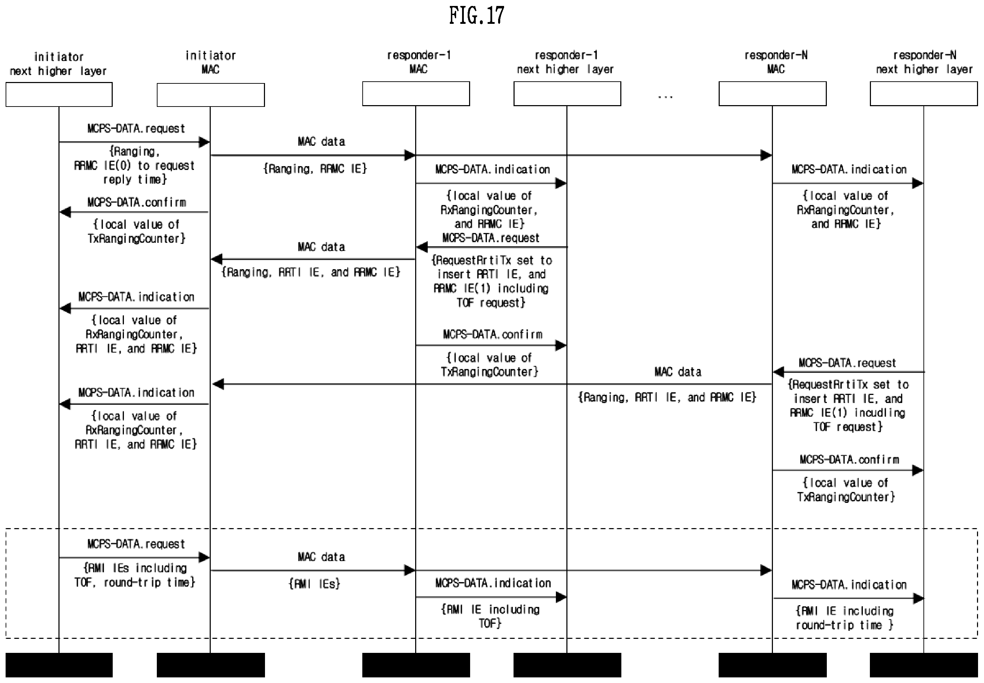

FIG. 17 shows an example of a message sequence chart for one-to-many SS-TWR to which the present disclosure may be applied.

In a ranging procedure for one-to-many TWR, ranging exchange may be initiated by an initiator transmitting a RRMC IE, and a RRMC IE may be included in a ranging initiation message broadcast to multiple responders.

A RRMC IE where a ranging control information field is set as 0 (i.e., RRMC IE(0)) may be transmitted as a SS-TWR ranging initiation message. The reply time request field of a RRMC IE may be set as 1 to request a reply time from a responding ERDEV.

A RRMC IE delivered through a MCPS-DATA.indication primitive from each of the responder-1 to responder-N may give a signal to the next higher layer that must perform a ranging response. Each responder may insert a RequestRrtiTxList parameter into a RRTI IE (as a response to the reply time request of a RRMC IE) and transmit a RRMC IE where a ranging control information field is set as 1 (i.e., RRMC IE(1)) to an initiator. Here, responding RFRAMEs may be transmitted to an initiator in a unicast manner.

When an initiator receives each ranging response frame, an initiator may have sufficient information to calculate the TOF of a corresponding responder.

The final message broadcast by an initiator may include at least one RMI IE(s) for measurement report (when requested by a RRMC IE). A plurality of RMI IEs may be distinguished by a device associated by an address field. For example, responder-1 may set a TOF request field in a RRMC IE as 1, and responder-N may set a round-trip time request field in a RRMC IE as 1. When multiple responders request the same information set like TOF, measurement report from an initiator may be performed through one RMI IE within a final data message.

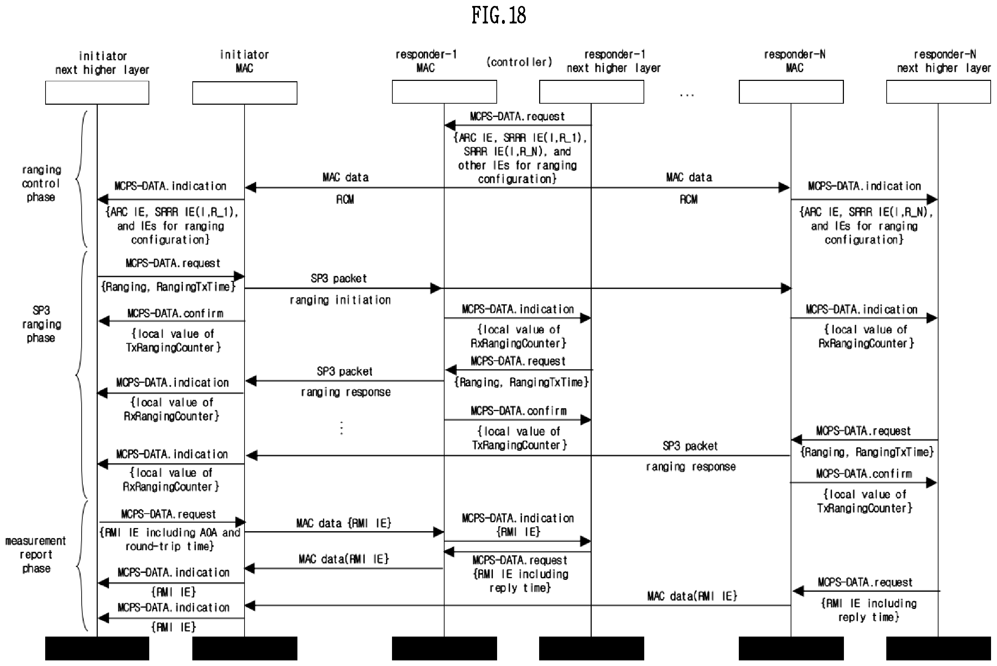

FIG. 18 shows an example of a message sequence chart for SP3 one-to-many SS-TWR to which the present disclosure may be applied.

At the start of a ranging round, a RCM may transmit ranging configuration information and an IE related thereto. A SRRR IE (I, R_1) may set RAOA and RRTT fields as 1 when responder-1 requests AOA and round-trip time from an initiator side.

Multi-node SP3 ranging may be based on scheduling designated by the next higher layer of a controller (i.e., each time slot is allocated to be used in a specific ERDEV).

A RDM IE in a RCM may include information that allocates time slots and device roles within a ranging round. An ARC IE may designate a ranging procedure and a SP3 packet format to make the next higher layer of an ERDEV to recognize the start and end of a SP3 ranging phase and invoke a MLME-STS primitive for enabling/disabling a SP3 packet before/after a ranging phase.

A RSKD IE for exchanging the parts of a STS seed for initializing STS generation between participating ERDEVs may be included in a RCM. According to the scheduling information of ranging transmission, the STS counter value of participating ERDEVs may be appropriately set for transmitting and receiving SP3 packets.

In a SP3 ranging phase, the next higher layer may appropriately set an operation on both sides by using MLME-STS.request to select a SP3 packet format and may set correct values for phyHrpUwbStsKey, phyHrpUwbStsVUpper96 and phyHrpUwbStsVCounter attributes. Since ranging scheduling is designated by a RCM preceding SP3 ranging, a device already knows a participant. Each time slot may be allocated to a specific (E)RDEV.

In a measurement report phase, an initiator may transmit AOA and round-trip time to responder-1 through a RMI IE. Responder-1 to responder-N may embed a requested reply time into a RMI IE sent to an initiator, respectively.

As another example, in the SP3 ranging phase of a message sequence for SP3 one-to-many DS-TWR, after receiving a SP3 frame as a ranging response message from each responder, an initiator may transmit a SP3 frame as a ranging completion message to each responder, through which the local value of an initiator's TxRangingCounter may be delivered to each responder. In a measurement report phase, an initiator may transmit a RMI IE including a reply time and a round-trip time to responders, and for this, each responder may transmit a RMI IE including AOA to an initiator.

### Hyper Block-based Mode

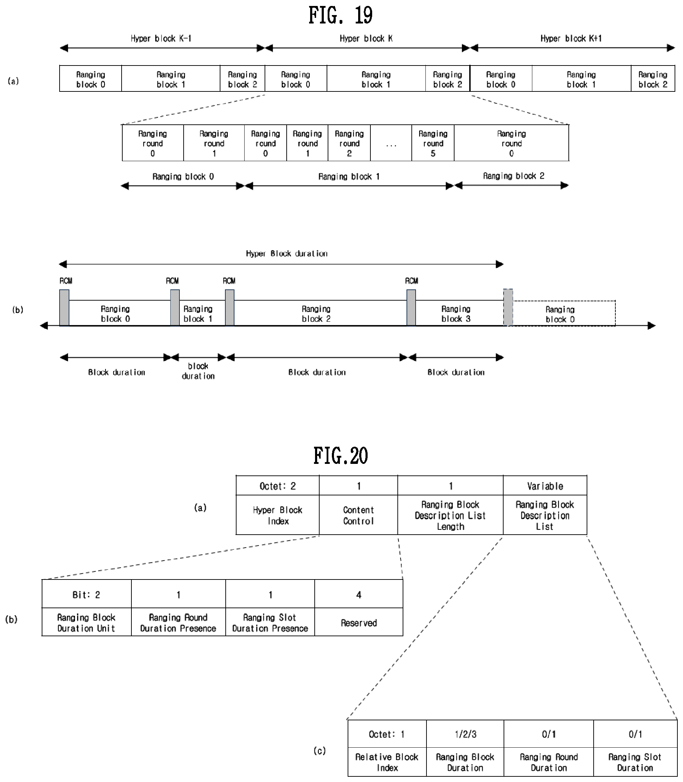

FIG. 19 shows an example of a time structure in a hyper block-based mode according to the present disclosure.

In the example of FIG. 19(a), a hyper block may correspond to a group of blocks. A hyper block-based mode may allow a group of blocks having a different configuration (e.g., a block duration, a round duration, a slot duration, etc.). A hyper block may be performed based on an interval-based mode, or may be performed based on a block-based mode. Different hyper blocks may have the same configuration or a different configuration.

As in the example of FIG. 19(b), information on a configuration for a hyper block structure may be repeatedly transmitted by a controller through a RCM (or a frame including the above-described block allocation schedule information). For this purpose, a hyper block structure (HBS) IE may be defined. For example, a HBS IE may include the index of a corresponding block, a block duration for each of all blocks included in a hyper block, a list of controlees corresponding to each block, etc. A controlee that receives a HBS IE included in a RCM (or a frame including the above-described block allocation schedule information) may know that a hyper block structure is applied/performed, and may know in which block it performs an operation.

In order to perform a hyper block-based mode, a controller may transmit a RCM including a HBS IE (or a frame including the above-described block allocation schedule information) to configure a hyper block for controlee(s). A message/a frame including a HBS IE may be transmitted at a time when the above-described block allocation schedule information is transmitted. An ARC IE may be further included in the RCM (or frame including the above-described block allocation schedule information) of a corresponding block for block configuration.

As described above, a hyper block-based mode may be performed based on a block-based mode or an interval-based mode. When being performed based on an interval-based mode, a controller may use a RIU IE to designate an interval between the start times of a block having the same index in each hyper block. For example, a controller may transmit a RCM including a RIU IE (or a frame including the above-described block allocation schedule information) at the start time of the first block (i.e., block 0) of each hyper block (i.e., the start of slot 0 of round 0 of block 0). Since a RCM (or a frame including the above-described block allocation schedule information) is transmitted at the start time of block 0 in hyper block K including a RIU IE, the block interval field of a RIU IE may indicate the remaining time until the start time of block 0 in hyper block K+1 including a RIU IE.

FIG. 20 is a diagram showing an example of a HBS IE format according to the present disclosure.

The HBS IE of FIG. 20(a) may include information for the duration of each ranging block (i.e., relative block) within a hyper block. An HBS IE may include an associated ranging block index field and a ranging block description list field for all ranging blocks within a hyper block. A controlee receiving an HBS IE through an RCM (or a frame including the aforementioned block allocation schedule information) may recognize that a hyper block is present.

In the example of FIG. 20(a), a hyper block index field may indicate the index of a hyper block.

A content control field, as shown in FIG. 20(b), may include a ranging block duration unit field, a ranging round duration presence field within a ranging block description list element and a ranging slot duration presence field within a ranging block description list element.

The ranging block duration unit field of a content control field may indicate the size of a ranging block duration field as follows.

**[Table 8]**

| Value of Ranging Block Duration Unit Field | Meaning |
|---|---|
| 00 | The size of a ranging block duration field is 1 octet, and the unit of a ranging block duration field is the number of rounds. |
| 01 | The size of a ranging block duration field is 2 octets, and the unit of a ranging block duration field is the number of slots. |
| 10 | The size of a ranging block duration field is 3 octets, and the unit of a ranging block duration field is the number of RSTUs. |
| 11 | Reserved |

The ranging round duration presence field of a content control field may indicate that a ranging round duration field is present in a ranging block description list element when its value is 1, and may indicate that it is not present when its value is 0.

The ranging slot duration presence field of a content control field may indicate that a ranging slot duration field is present in a ranging block description list element when its value is 1, and may indicate that it is not present when its value is 0.

Referring again to FIG. 20(a), a ranging block description list length field may indicate the total number of ranging blocks belonging to a hyper block (also, the total number of block description list elements corresponding to the total number of ranging blocks).

A ranging block description list field may include a list of description elements for each of all blocks belonging to a hyper block.

FIG. 20(c) represents an example of the format of each of at least one element included in a ranging block description list.

A relative block index field may indicate the index of a ranging block (i.e., a relative block) within a hyper block. The index value of a ranging block may start at 0 within each hyper block.

The size of a ranging block duration field is determined according to the value of the ranging block duration unit field of a content field described above, and may be set as an unsigned integer value indicating a ranging block duration value based on a corresponding unit.

A ranging round duration field may be set as an unsigned integer value corresponding to the number of ranging slots per ranging round.

A ranging slot duration field may be set as an unsigned integer value corresponding to a ranging slot duration in an RSTU unit.

### Bitmap-based Hyper Block Scheduling

A scheduling IE may be used by a controller to schedule slots to be used by an intended device. For example, in order to ensure that a controlee may know the scheduling information of a hyper block, a controller may include a scheduling IE (e.g., a scheduling IE in which a scheduling list type field is set as 5, i.e., corresponding to bitmap-based hyper block scheduling) in a control message and transmit it to a controlee.

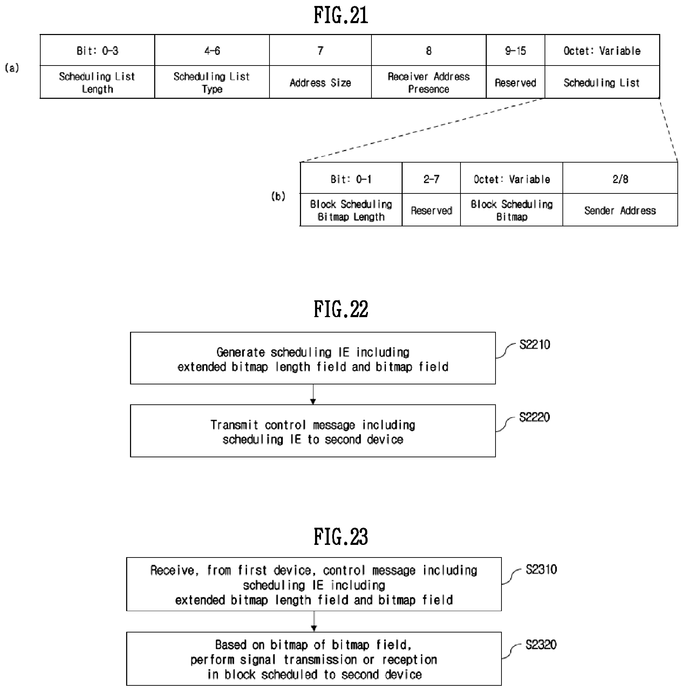

FIG. 21 is a diagram representing an example of a scheduling IE format according to the present disclosure.

FIG. 21(a) represents an example of the content field format of a scheduling IE.

A scheduling list length field may indicate the number of elements included within a scheduling list field. An element included in a scheduling list field may have a format corresponding to the value of a scheduling list type field. A scheduling list type field may be defined as shown in Table 9. In the example of Table 9, Type 5 may be set for the aforementioned hyper block-based mode.

**[Table 9]**

| Scheduling List Type Field Value | Meaning |
|---|---|
| 0 | Per-slot scheduling |
| 1 | Consecutive slot scheduling |
| 2 | Bitmap-based scheduling |
| 3 | Periodic scheduling |
| 4 | Ranging sequence fragment (RSF) scheduling |
| 5 | Bitmap-based block scheduling |
| 6-7 | Reserved |

An address size field may indicate the size of a sender address field or a receiver address field or the addresses of an address list (in the case of block allocation scheduling). When the value of a receiver address present field is 1, a receiver address field is present, and when its value is 0, a receiver address field is not present.

FIG. 21(b) represents an exemplary format of a scheduling list field when the value of a scheduling list type field is 5.

A block scheduling bitmap length (or hyper block scheduling bitmap length) field represents the length of a block scheduling bitmap (or hyper block scheduling bitmap) field, and may be set as shown in Table 10.

**[Table 10]**

| Block Scheduling Bitmap Length Field Value | Size of Block Scheduling Bitmap Field |
|---|---|
| 0 | 8 bits (i.e., an 8-bit bitmap) |
| 1 | 16 bits (i.e., a 16-bit bitmap) |
| 2 | 32 bits (i.e., a 32-bit bitmap) |
| 3 | 64 bits (i.e., a 64-bit bitmap) |

A block scheduling bitmap may enable the scheduling of multiple blocks within a hyper block to a device using one scheduling list element. A bitmap within each scheduling list element may represent the pattern of a block scheduled for one device. The block description list element index of an HBS IE may be matched with each bit. For example, the first element of the block description list of an HBS IE may be applied to the same block as the first bit of a bitmap. Accordingly, a device receiving an HBS IE and a scheduling IE (Type 5) may know the block duration and index of a block in which it will be activated.

A sender address may represent each participating device.

A scheduling IE with a scheduling list type of 5 or a container for hyper block scheduling similar thereto may be included in a control message and transmitted at the same periodicity as an HBS IE. When a scheduling IE (Type 5) is not transmitted along with an HBS IE, it may mean that it does not include hyper block scheduling information, or may mean that the recently received scheduling IE (Type 5) is maintained without being changed. A scheduling IE (Type 5) may be reused, or the expired time of corresponding information may be applied.

Block-based bitmap scheduling using a scheduling IE (Type 5) may be applied not only to a hyper block-based mode but also to a general block-based mode (i.e., a general block-based mode in which a hyper block is not defined). A bitmap size/length defined for the block-based bitmap scheduling of a hyper block-based mode and a block-based mode may be defined as 8, 16, 32, or 64 bits as shown in Table 10. The maximum number of blocks that may be scheduled through a bitmap per device may be defined as 64. Meanwhile, in the existing 802.15.4z technology and 802.15.4ab technology, a (relative) block index defined in a hyper block-based mode and a block index defined in a general block-based mode may be defined as 2 octets. The maximum number of blocks that may be allocated by using this 2-octet block index field may be 256 or 65536. As such, since the length of the bitmap of the currently defined scheduling IE (Type 5) is a maximum of 64 bits, it needs to be extended or modified to support up to 65536 blocks.

Accordingly, in applying bitmap-based block scheduling in a hyper block-based mode, an efficient method that minimizes signaling overhead while supporting a large number of block indexes is required.

Various examples of the present disclosure for optimizing the bitmap size of an HBS IE and a scheduling IE including information that may maximize the power saving of a device by applying a hyper block-based mode and a duty cycle in a block unit are described below.

FIG. 22 is a diagram for describing the operation of the first device according to the present disclosure.

In the example of FIG. 22, the first device may correspond to a controller, and the second device may correspond to a controlee. In addition, the first device and the second device may correspond to ERDEVs.

In S2210, the first device may generate a scheduling IE including an extended bitmap length field and a bitmap field.

The length of the bitmap field of a scheduling IE may be based on the value of an extended bitmap length field.

For example, it may be assumed that the maximum number of block index values to which a bitmap may be applied is 256 (or that the maximum range of a block index value is 0-255, or that the size of a block index field is 1 octet). In this case, an extended bitmap length field may be a bitmap length field having a size greater than 2 bits (e.g., 3 bits). The 8 values of a 3-bit bitmap length field (e.g., 0-7) may indicate 8 different bitmap lengths, respectively. For example, the minimum value of the eight bitmap lengths may be 8 bits, and the maximum value may be 256 bits. For example, eight bitmap lengths may be 8, 16, 32, 64, 96, 128, 192, and 256.

Alternatively, it may be assumed that the maximum number of block index values to which a bitmap may be applied is 65536 (or that the maximum range of a block index value is 0-65535, or that the size of a block index field is 2 octet). In this case, an extended bitmap length field may be a bitmap length field having a size of 4 bits. The 16 values of a 4-bit bitmap length field (e.g., 0-15) may indicate 16 different bitmap lengths, respectively.

Alternatively, an extended bitmap length field may support a bitmap with an extended length by using a bitmap length field with a size of 2 bits and a scaling factor with a size of 1 bit. Alternatively, an extended bitmap length field may support a bitmap with an extended length by using a bitmap length field with a size of 2 bits and a scaling factor with a size of 2 bits. Accordingly, based on the value of a bitmap length field and the value of a scaling factor, an extended bitmap length may be supported.

Additionally, or alternatively, a more blocks bit/field may be added to a scheduling IE. A more blocks bit/field may indicate whether the number of scheduled blocks is greater than the number of blocks designated in a bitmap length.

The value of the scheduling list type field of this scheduling IE may be set as a value representing bitmap-based block scheduling or 5. In relation to a hyper block-based mode, each bit of the bitmap of a bitmap field may be applied to each block within one hyper block.

In S2220, the first device may transmit a control message including a scheduling IE to the second device.

A bit that is set as 1 in the bitmap of a bitmap field included in a scheduling IE may indicate that a corresponding block is scheduled to the second device, and a bit that is set as 0 in a bitmap may indicate that a corresponding block is not scheduled to the second device. Accordingly, a power saving operation by the second device may be performed in a block that is not scheduled.

A scheduling IE may be transmitted in the same ranging round as an HBS IE for block scheduling in a hyper block mode. For example, the size of the block index field of the ranging block description list of an HBS IE may be 1 octet or 2 octets.

In the example of FIG. 22, a control message including a scheduling IE and an HBS IE may be included in a narrowband PPDU according to an O-QPSK PHY as in FIG. 2, or may be included in a UWB PPDU as in FIG. 2 or FIG. 3.

As an additional or alternative example to the example of FIG. 22, a control message including a scheduling IE may be generated by the first device (or a transmitting device). A scheduling IE may include information for in which block each device is active (e.g., a block scheduling bitmap for the hyper block of a scheduling list element, etc.). When the number of blocks exceeds the maximum number of bitmap lengths (e.g., 64) or when it is necessary to configure block scheduling information, a more blocks field may be set as 1. Otherwise, a more blocks field may be set as 0. An IE (e.g., an HBS IE, an RR IE, etc.) including information such as a block index and a block duration, etc. may be transmitted together with a scheduling IE. An RCM including a scheduling IE generated in this way may be converted into a PPDU and transmitted to a receiving device (e.g., the second device).

A method described in the example of FIG. 22 may be performed by the first device 100 in FIG. 1. For example, at least one processor 102 of the first device 100 of FIG. 1 may be configured to generate a scheduling IE including an extended bitmap length field and a bitmap field and transmit a scheduling IE to the second device through at least one transceiver 106. Furthermore, at least one memory 104 of the first device 100 may store instructions for performing a method described in the example of FIG. 22 or examples described below when executed by at least one processor 102.

For example, the processor 102 may configure a packet based on information stored in the memory 104. A packet generated by the processor 102 may have the format of a scheduling IE described in the present disclosure. The processor 102 may generate a transmission packet and store information about a transmission packet in the memory 104.

FIG. 23 is a diagram for describing the operation of the second device according to the present disclosure.

In S2310, the second device may receive, from the first device, a control message including a scheduling IE including an extended bitmap length field and a bitmap field.

In S2320, the second device may perform signal transmission or reception in a block scheduled to the second device based on the bitmap of a bitmap field.

In the example of FIG. 23, since the specific features of a scheduling IE and the features of an HBS IE, etc. included in a control message along with a scheduling IE are the same as described in the example of FIG. 22, an overlapping description is omitted.

As an additional or alternative example to the example of FIG. 23, the second device (or a receiving device) may obtain block scheduling information by decoding a control message/a PPDU including a received scheduling IE. The second device may obtain block scheduling information including itself and confirm the value of more blocks included therein. When the value of more blocks is 1, the second device may obtain current block information (e.g., a block index, a block duration, hyper block information, etc.) to map a block scheduling bitmap and block-scheduled index information based on the information of a current block because more blocks are scheduled than a block scheduling bitmap length. Accordingly, the second device may obtain the information of block(s) to which it is scheduled and determine a duty cycle. The second device may repeat active/sleep according to a duty cycle, and may attempt to receive an RCM again when a multiple blocks duration (e.g., calculated based on a block scheduling bitmap length and block information) expires. Alternatively, when the value of more blocks is 0, the second device may determine whether to re-receive an RCM by checking a duration when there is information that may derive a residual duration such as a hyper block mode, and may attempt to receive an RCM until it receives scheduling information in which the value of more blocks is 1 when there is no information that may derive a residual duration such as a hyper block mode.

A method described in the example of FIG. 23 may be performed by the second device 200 of FIG. 1. For example, at least one processor 202 of the second device 200 of FIG. 1 may be configured to receive, from the first device through at least one transceiver 206, a control message including a scheduling IE including an extended bitmap length field and a bitmap field and perform signal transmission or reception through at least one transceiver 206 in a block scheduled to the second device based on the bitmap of a bitmap field. Furthermore, at least one memory 204 of the second device 200 may store instructions for performing a method described in the example of FIG. 23 or examples described below when executed by at least one processor 202.

For example, the processor 202 may perform decoding on a received packet. Specifically, it may remove noise and interference through amplification and filtering and convert a signal into binary data through sampling, demodulation and decoding. For example, in a decoding process, a BPSK or O-QPSK demodulator may be used, and a process of mapping a chip to a symbol, convolution, Reed-Solomon decoding, etc. may be performed. Reconstructed data may be used to extract original transmitted information. It may include error correction, data recovery techniques, etc. to check if transmitted data is correctly received. In addition, the processor 202 may decode the data field of a packet received through the transceiver 206. In addition, the processor 202 may process decoded data. For example, the processor 202 may perform a processing operation for transmitting information about a decoded data field to a higher layer (e.g., an MAC layer). In addition, when the generation of a signal is indicated from a higher layer to a PHY layer in response to data transmitted to a higher layer, it may perform a subsequent operation.

The examples of FIGS. 22 and 23 may correspond to some of the various examples of the present disclosure. Hereinafter, various examples of the present disclosure including the examples of FIGS. 22 and 23 will be described in more detail.

### Embodiment 1

This embodiment relates to a method for reducing signaling overhead related to bitmap-based block scheduling.

### Embodiment 1-1

When the size of a block index field is 2 octets, it may support up to 65536 block indexes. In this case, the maximum length of the bitmap of bitmap-based block scheduling (e.g., scheduling IE Type 5) mapped to the number of blocks may be extended to support 65536. For example, the value of a block scheduling bitmap length field and the length of a bitmap indicated by each value may be defined as shown in the following table.

**[Table 11]**

| Block Scheduling Bitmap Length Field Value | Size of Block Scheduling Bitmap Field |
|---|---|
| 0 | 8-Bit bitmap |
| 1 | 16-Bit bitmap |
| 2 | 32-Bit bitmap |
| 3 | 64-Bit bitmap |
| 4 | 128-Bit bitmap |
| 5 | 256-Bit bitmap |
| 6 | 512-Bit bitmap |
| 7 | 1024-Bit bitmap |
| 8 | 2048-Bit bitmap |
| 9 | 4096-Bit bitmap |
| 10 | 8192-Bit bitmap |
| 11 | 16384-Bit bitmap |
| 12 | 32768-Bit bitmap |
| 13 | 65536-Bit bitmap |
| 14 | Reserved |
| 15 | Reserved |

Additionally, or alternatively, in order to apply finer graduality, the value of a block scheduling bitmap length field and the length of a bitmap indicated by each value may be defined as shown in the following table.

**[Table 12]**

| Block Scheduling Bitmap Length Field Value | Size of Block Scheduling Bitmap Field |
|---|---|
| 0 | 8-Bit bitmap |
| 1 | 16-Bit bitmap |
| 2 | 32-Bit bitmap |
| 3 | 64-Bit bitmap |
| 4 | 96-Bit bitmap |
| 5 | 128-Bit bitmap |
| 6 | 192-Bit bitmap |
| 7 | 256-Bit bitmap |
| 8 | 512-Bit bitmap |
| 9 | 1024-Bit bitmap |
| 10 | 2048-Bit bitmap |
| 11 | 4096-Bit bitmap |
| 12 | 8192-Bit bitmap |
| 13 | 16384-Bit bitmap |
| 14 | 32768-Bit bitmap |
| 15 | 65536-Bit bitmap |

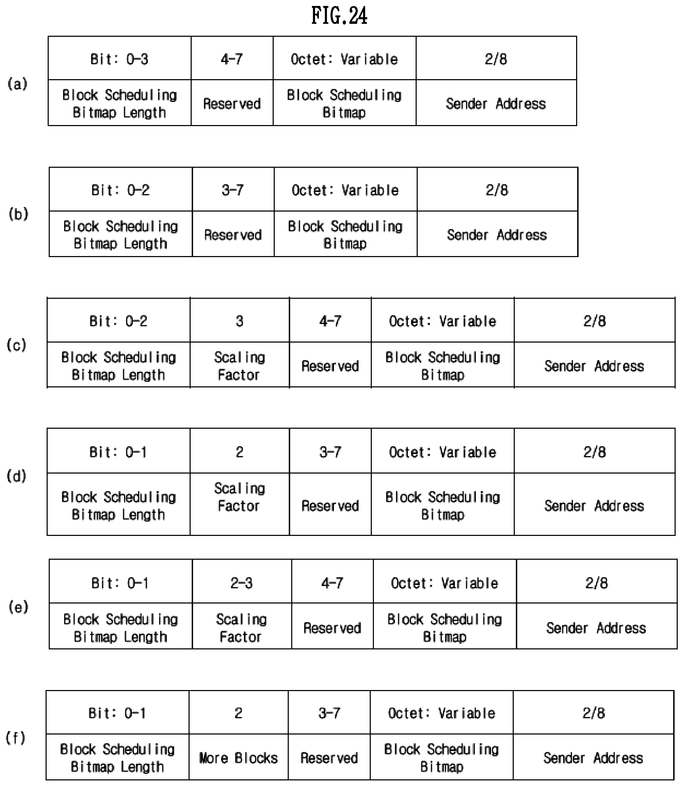

When a block scheduling bitmap length field for a block-based mode is defined as shown in the aforementioned examples, a scheduling list element within a scheduling IE in which the value of a scheduling list type is set as 5 (or for bitmap-based block scheduling) may be defined as shown in FIG. 24(a). Embodiment 1-2

When the size of a block index field is 1 octet, it may support up to 256 block indexes. In this case, the maximum length of the bitmap of bitmap-based block scheduling (e.g., scheduling IE Type 5) mapped to the number of blocks may be extended to support 256. For example, the value of a block scheduling bitmap length field and the length of a bitmap indicated by each value may be defined as shown in the following table.

**[Table 13]**

| Block Scheduling Bitmap Length Field Value | Size of Block Scheduling Bitmap Field |
|---|---|
| 0 | 8-Bit bitmap |
| 1 | 16-Bit bitmap |
| 2 | 32-Bit bitmap |
| 3 | 64-Bit bitmap |
| 4 | 96-Bit bitmap |
| 5 | 128-Bit bitmap |
| 6 | 192-Bit bitmap |
| 7 | 256-Bit bitmap |

When a block scheduling bitmap length field for a block-based mode is defined in this way, a scheduling list element within a scheduling IE in which the value of a scheduling list type is set as 5 (or for bitmap-based block scheduling) may be defined as shown in FIG. 24(b).

### Embodiment 1-3

By applying a scaling factor to the value of a block scheduling bitmap length field, a bitmap length in an extended range may be supported while maintaining the existing size and value of a block scheduling bitmap length field.

For a case in which the size of a block index field is 2 octets, for example, when a 1-bit scaling factor is applied, a scaling unit may be applied as 1024. In this case, a bitmap of an extended length such as 8192, 16384, 32768 and 65538 may be supported. A scaling unit and a scaling method may be defined in various ways to support various values less than or equal to the maximum value. The following table corresponds to an example in which a scaling unit is set as 0 and 1 and the default value of a bitmap size (i.e., a bitmap size when the value of a scaling factor is 0) is 8 to 32768.

**[Table 14]**

| Block Scheduling Bitmap Length Field Value | Size of Block Scheduling Bitmap Field (Scaling Factor 0) | Size of Block Scheduling Bitmap Field (Scaling Factor 1) |
|---|---|---|
| 0 | 8-Bit bitmap | 16-Bit bitmap |
| 1 | 32-Bit bitmap | 64-Bit bitmap |
| 2 | 128-Bit bitmap | 256-Bit bitmap |
| 3 | 512-Bit bitmap | 1024-Bit bitmap |
| 4 | 2048-Bit bitmap | 4096-Bit bitmap |
| 5 | 8192-Bit bitmap | 16384-Bit bitmap |
| 6 | 32768-Bit bitmap | 65536-Bit bitmap |
| 7 | Reserved | Reserved |

In the example of the table, when the value of a scaling factor is 0, it corresponds to a case in which scaling is not applied to a block scheduling bitmap length field value (no scaling) or scaling of *1 (meaning 1 time) is applied, and when the value of a scaling factor is 1, it represents a case in which scaling of *2 (meaning 2 times) is applied to a block scheduling bitmap length field value. When a block scheduling bitmap length field for a block-based mode is defined in this way, a scheduling list element within a scheduling IE in which the value of a scheduling list type is set as 5 (or for bitmap-based block scheduling) may be defined as shown in FIG. 24(c).

### Embodiment 1-4

For a case in which the size of a block index field is 1 octet, a scaling factor may be applied to support a bitmap length less than or equal to a value of 256.

For example, by defining the size of a block scheduling bitmap length field as 2 bits and applying a scaling factor value of 0 or 1 (e.g., scaling of *1 or scaling of *2), various bitmap lengths may be indicated according to a combination thereof. For example, bitmaps of various lengths may be supported as shown in the following table.

**[Table 15]**

| Block Scheduling Bitmap Length Field Value | Size of Block Scheduling Bitmap Field (Scaling Factor 0) | Size of Block Scheduling Bitmap Field (Scaling Factor 1) |
|---|---|---|
| 0 | 8-Bit bitmap | 96-Bit bitmap |
| 1 | 16-Bit bitmap | 128-Bit bitmap |
| 2 | 32-Bit bitmap | 196-Bit bitmap |
| 3 | 64-Bit bitmap | 256-Bit bitmap |

When a block scheduling bitmap length field for a block-based mode is defined in this way, a scheduling list element within a scheduling IE in which the value of a scheduling list type is set as 5 (or for bitmap-based block scheduling) may be defined as shown in FIG. 24(d). Embodiment 1-5

For a case in which the size of a block index field is 2 octets, various bitmap lengths as shown in the following table may be supported by setting the unit or value of a scaling factor as 0, 1, 2 or 3. A scaling factor value of 0 may correspond to scaling of *1 (or no scaling), a scaling factor value of 1 may correspond to scaling of *16, a scaling factor value of 2 may correspond to scaling of *256, and a scaling factor value of 3 may correspond to scaling of *4096.

**[Table 16]**

| Block Scheduling Bitmap Length Field Value | Size of Block Scheduling Bitmap Field (Scaling Factor 0) | Size of Block Scheduling Bitmap Field (Scaling Factor 1) | Size of Block Scheduling Bitmap Field (Scaling Factor 2) | Size of Block Scheduling Bitmap Field (Scaling Factor 3) |
|---|---|---|---|---|
| 0 | 8-Bit bitmap | 128-Bit bitmap | 2048-Bit bitmap | 32768-Bit bitmap |
| 1 | 16-Bit bitmap | 256-Bit bitmap | 4096-Bit bitmap | 65536-Bit bitmap |
| 2 | 32-Bit bitmap | 512-Bit bitmap | 8192-Bit bitmap | Reserved |
| 3 | 64-Bit bitmap | 1024-Bit bitmap | 16384-Bit bitmap | Reserved |

When a block scheduling bitmap length field for a block-based mode is defined in this way, a scheduling list element within a scheduling IE in which the value of a scheduling list type is set as 5 (or for bitmap-based block scheduling) may be defined as shown in FIG. 24(e).

### Embodiment 1-6

For a case in which the size of a block index field is 2 octets, bitmap-based block scheduling that may support up to 65536 blocks in a hyper block-based mode or a block-based mode may be applied. Since signaling overhead may increase as the number of blocks that may be supported increases, it may be considered to limit the number of blocks (or a bitmap length) that may be indicated in the scheduling IE of bitmap-based block scheduling (or Type 5).

For example, when the maximum number of blocks is limited to 1024, a block scheduling bitmap length field may be set as a 2-bit size and a scaling factor may be set as a 1-bit size to support a total of 8 block scheduling bitmap field lengths. For example, as shown in the following table, it may be defined that when the value of a scaling factor is 0, scaling of *1 is applied and when the value of a scaling factor is 1, scaling of *16 is applied.

**[Table 17]**

| Block Scheduling Bitmap Length Field Value | Size of Block Scheduling Bitmap Field (Scaling Factor 0) | Size of Block Scheduling Bitmap Field (Scaling Factor 1) |
|---|---|---|
| 0 | 8-Bit bitmap | 128-Bit bitmap |
| 1 | 16-Bit bitmap | 256-Bit bitmap |
| 2 | 32-Bit bitmap | 512-Bit bitmap |
| 3 | 64-Bit bitmap | 1024-Bit bitmap |

When a block scheduling bitmap length field for a block-based mode is defined in this way, a scheduling list element within a scheduling IE in which the value of a scheduling list type is set as 5 (or for bitmap-based block scheduling) may be defined as shown in FIG. 24(d). The scope of the present disclosure is not limited to a case in which the size of a scaling factor is 1 bit or 2 bits, but may be extended to a case in which a scaling factor of 3 bits or more is applied. In addition, the size (or multiple) of scaling to which the value of a scaling factor refers is not limited to the aforementioned examples, and may be defined as various values. For example, a 3-bit scaling factor field is defined, and the values of 8 scaling factors may be defined to correspond to *1, *4, *8, *12, *16, *20, *24 and *28, respectively. A scaling multiple mapped to the value of a scaling factor may be defined by considering a scaling range according to the definition of the value of an existing block scheduling bitmap field. Alternatively, for a block-based mode, when bitmap-based block scheduling (or a scheduling IE of Type 5) is applied, only scheduling information for a current block may be included. In this case, a block scheduling bitmap length field may be set as a value of 0 to indicate that a bitmap with a size of 8 bits is applied, and a block scheduling bitmap in this case may be 0x00000000 or 0x10000000.

### Embodiment 2

This embodiment relates to the enhancement of a bitmap size for bitmap-based block scheduling.

As the number of blocks increases, the size of the block scheduling bitmap of bitmap-based block scheduling (or a scheduling IE of Type 5) increases. When the size of a block index field is 2 octets, up to 65536 blocks may be supported, and the maximum bitmap length may need 8192 octets (= 65536 bits). Examples of the present disclosure for reducing/enhancing such signaling overhead are described below.

First, it may be assumed that a block scheduling bitmap length field has a 2-bit size and indicates the size of the following block scheduling bitmap field.

**[Table 18]**

| Block Scheduling Bitmap Length Field Value | Size of Block Scheduling Bitmap Field |
|---|---|
| 0 | 8-Bit bitmap |
| 1 | 16-Bit bitmap |
| 2 | 32-Bit bitmap |
| 3 | 64-Bit bitmap |

To additionally reduce the size of a block scheduling bitmap length field, it may be assumed that it is defined as a 1-bit size, a value of 0 indicates an 8-bit bitmap length and a value of 1 indicates a 16-bit bitmap length. Other various sizes and bitmap length candidates corresponding thereto may also be defined. In a situation where a bitmap length candidate is limited in this way, a bit called more blocks may be additionally defined to support scheduling for up to 65536 blocks. For example, a 1-bit more blocks field may be defined as shown in FIG. 24(f). A more blocks field may indicate whether the number of blocks to be scheduled is greater than the number of blocks designated in a block scheduling bitmap length.

A block scheduling bitmap may include a binary bitmap string. Each bit of a bitmap may be mapped to subsequent blocks by including a block in which a scheduling IE (of Type 5) is transmitted. When the bit value of a bitmap is 0, it may mean that it is not scheduled to a corresponding block and when a bit value is 1, it may mean that it is scheduled to a corresponding block. When the value of the more blocks field of a previously received scheduling IE (or Type 5) is 1, a current block index in which a scheduling IE (of Type 5) is transmitted becomes a base index, and each bit within a bitmap may be mapped as it increases from a base index one by one.

A controlee receiving a scheduling IE (of Type 5) may determine a duty cycle based on the information of a more blocks field and a block scheduling bitmap field. For example, it may be assumed that the total number of blocks subject to scheduling is 67. In this case, when the value of a block scheduling bitmap length field is 3, a 64-bit bitmap may be applied according to Table 18. A controlee that first receives a scheduling IE (of Type 5) in which a more blocks field is set as 1 may determine its duty cycle (i.e., active only in a scheduled block, and operates in a sleep state in a block that is not scheduled) based on block scheduling information indicated in a bitmap for as many blocks as a block scheduling bitmap length (i.e., 64) (e.g., block indexes 0 to 63). Even in a sleep state, a controlee may wake up after 64 block durations and receive and decode a new scheduling IE (of Type 5) through an RCM. The value of a more blocks field included in a newly received scheduling IE (or Type 5) is 0, and the value of a block scheduling bitmap length is 0, which may refer to an 8-bit bitmap according to Table 18. Accordingly, a controlee may obtain block scheduling information for residual 3 blocks (e.g., block indexes 64, 65 and 66) among a total of 67 blocks from the first 3 bits of an 8-bit bitmap. When residual blocks (e.g., 3 blocks) are smaller than the length of a block scheduling bitmap field (e.g., 8), the remaining bits (e.g., the remaining 5 bits excluding the first 3) may be ignored.

For a hyper block-based mode, since a controlee may know a hyper block duration from the structure information of a hyper block such as an HBS IE, it may determine a duty cycle accordingly. For a case in which the structure of the high level/unit of a block is not provided, such as a block-based mode, when the value of a more blocks field is 0, it may attempt to receive an scheduling IE (of Type 5) included in the RCM of each block. In this case as well, since it may obtain information for whether a controlee is scheduled for a corresponding block, it may determine a duty cycle for the remaining durations excluding a control phase within a block (e.g., maintain an active state when scheduled to a corresponding block, and transition to a sleep state when not scheduled to a corresponding block).

### Embodiment 3

This embodiment relates to examples using an extended bitmap-based scheduling IE.

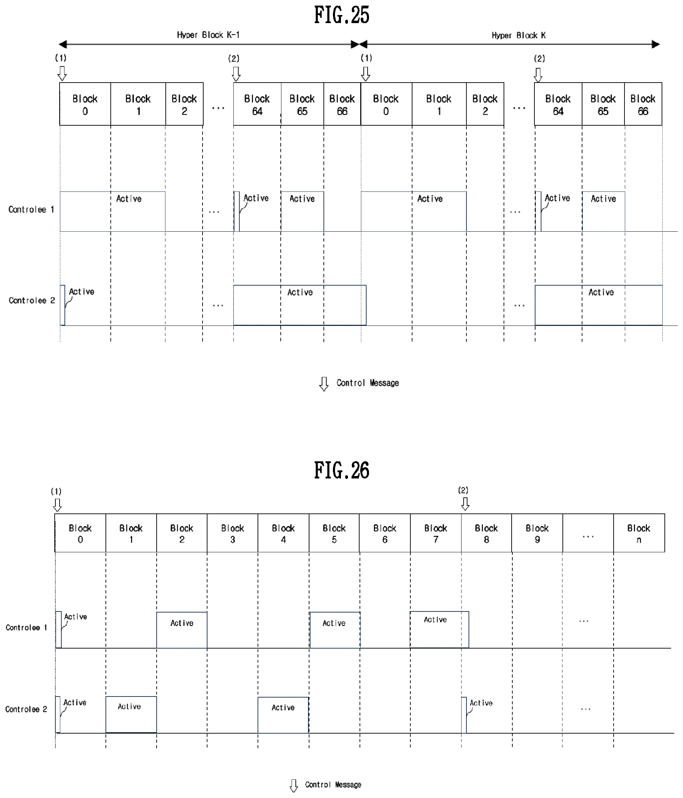

FIG. 25 is a diagram representing an example of an operation that uses a bitmap-based block scheduling IE in a hyper block-based mode according to the present disclosure.

It is assumed that the total number of blocks to be scheduled as in an example assumed in Embodiment 2 is 67 and a 64-bit bitmap is applied. In a control message in (1) (e.g., an RCM), controlee 1 and controlee 2 may receive a scheduling IE (of type 5) that includes a 64-bit bitmap and that the value of a more blocks field is set as 1. Controlees may determine their duty cycle by applying scheduling information for 64 blocks corresponding to a bitmap length. Each controlee may operate in an active state in block(s) corresponding to a bit set as 1 among a 64-bit bitmap, and may operate in a sleep state in block(s) set as 0. After a multiple blocks duration in which a block index corresponds to 63 (this value may be calculated from information included in an HBS IE, etc.), controlees may wake up and receive a scheduling IE (of Type 5) that includes an 8-bit bitmap and that the value of a more blocks field is set as 0 in a control message in (2) (e.g., an RCM). Accordingly, controlees may obtain block scheduling information for residual three blocks (block indexes 64, 65 and 66). When the number of residual blocks is smaller than a bitmap size, the remaining bits of a bitmap may be ignored. For a hyper block-based mode, since a controlee may know a hyper block duration from the structure information of a hyper block such as an HBS IE, it may determine a duty cycle accordingly. For example, an 8-bit bitmap received at block index 64 of hyper block K-1 may be applied as scheduling information for blocks 0, 1, 2, 3 and 4 of hyper block K.

The example of FIG. 25 represents an example in which bitmap-based block scheduling with the same pattern is applied to hyper block K-1 and hyper block K, but the scope of the present disclosure is not limited thereto, and different block scheduling may be applied in a different hyper block duration.

FIG. 26 is a diagram representing an example of an operation that uses a bitmap-based block scheduling IE in a block-based mode according to the present disclosure.

It is assumed that the total number of blocks to be scheduled is set as 8 and a controlee receives a scheduling IE for bitmap-based block scheduling (e.g., of Type 5) from a controller per 8 blocks. In a control message in (1) (e.g., an RCM), controlee 1 and controlee 2 may receive a scheduling IE (of type 5) in which a block scheduling bitmap length is set as 0 (i.e., a bitmap size is 8 bits) and the value of a more blocks field is 1. Accordingly, each controlee may determine its duty cycle according to an 8-bit bitmap. Each controlee may operate in an active state in block(s) corresponding to a bit set as 1 among a 8-bit bitmap, and may operate in a sleep state in block(s) set as 0. After a multiple blocks duration in which a block index corresponds to 8 (this value may be calculated from a bitmap length (e.g., 8) and block duration information included in an ARC IE, etc.), controlees may wake up and receive a scheduling IE (of Type 5) that includes an 8-bit bitmap and that the value of a more blocks field is set as 0 in a control message in (2) (e.g., an RCM). For a case in which the higher unit structure of a block is not defined, such as a block-based mode, when the value of a more blocks field is 0 and the number of residual blocks is smaller than the size of a block scheduling bitmap field, the remaining bits may be ignored. Accordingly, a controlee may attempt to obtain a scheduling IE (of Type 5) included in the RCM of each block. In this case as well, since information for whether it is scheduled to a corresponding block may be obtained, a duty cycle may be determined for the remaining durations other than a control phase within a block.

For scheduling that is not a block bitmap method in an existing UWB wireless network system, the total number of block indexes is not considered in scheduling, but in scheduling in a block bitmap method, especially in a block bitmap-based scheduling method within a hyper block, a block index starts from 0 for each hyper block, so a bitmap needs to be configured by considering the total number of blocks that may be indicated. According to the present disclosure, the length of a bitmap that is supported only up to the existing 64-bit size may be extended to provide a scheduling IE format that reduces signaling overhead by defining bitmaps of various sizes that support up to 256 or 65536 blocks.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed in the present disclosure is described based on an example applied to an IEEE 802.15.4-based system, but it may be applied to various UWB wireless network or wireless communication systems other than an IEEE 802.15.4-based system.

## Claims

1. A method, comprising:
generating, by a first device, a scheduling information element (IE) including an extended bitmap length field and a bitmap field; and
transmitting, by the first device to a second device, a control message including the scheduling IE,
wherein a length of the bitmap field is based on a value of the extended bitmap length field, and
wherein the extended bitmap length field includes a bitmap length field having a bit size greater than 2.

2. The method of claim 1, wherein:
the extended bitmap length field includes a bitmap length field having a size of 3 bits.

3. The method of claim 1, wherein:
a minimum value of the value of the extended bitmap length field corresponds to a bitmap of an 8-bit length.

4. The method of claim 1, wherein:
a maximum value of the value of the extended bitmap length field corresponds to a bitmap of a 256-bit length.

5. The method of claim 1, wherein:
the extended bitmap length field has one value of eight candidate values, and
the bitmap field has one length of eight candidate lengths in a range of 8 to 256.

6. The method of claim 1, wherein:
the eight candidate values correspond to the eight candidate lengths, respectively.

7. The method of claim 6, wherein:
the eight candidate values are 0, 1, 2, 3, 4, 5, 6, and 7, and
the eight candidate lengths are 8, 16, 32, 64, 96, 128, 192, and 256 bits.

8. The method of claim 6, wherein:
the eight candidate values, 0, 1, 2, 3, 4, 5, 6, and 7, correspond to the eight candidate lengths, 8, 16, 32, 64, 96, 128, 192, and 256, respectively.

9. The method of claim 1, wherein:
a bit set as 1 in a bitmap of the bitmap field indicates that a corresponding block is scheduled to the second device, and
a bit set as 0 in the bitmap indicates that the corresponding block is not scheduled to the second device.

10. The method of claim 9, wherein:
a power saving operation by the second device is performed in the unscheduled block.

11. The method of claim 1, wherein:
a value of a scheduling list type field of the scheduling IE is set as a value representing bitmap-based block scheduling or 5.

12. The method of claim 1, wherein:
the scheduling IE is transmitted in a same ranging round as a hyper block structure (HBS) IE for block scheduling in a hyper block mode.

13. The method of claim 1, wherein:
a size of a block index field of a ranging block description list of the HBS IE is 1 octet.

14. The method of claim 1, wherein:
each bit of a bitmap of the bitmap field is applied to each block within one hyper block.

15. The method of claim 1, wherein:
the first device corresponds to a controller, and
the second device corresponds to a controlee.

16. The method of claim 1, wherein:
the first device and the second device are enhanced ranging-capable devices (ERDEVs) operating in an ultra-wideband (UWB) wireless network system.

17. An apparatus, comprising:
at least one transceiver; and
at least one processor connected to the at least one transceiver,
wherein the at least one processor is configured to:
generate, by a first device, a scheduling information element (IE) including an extended bitmap length field and a bitmap field; and
transmit, by the first device to a second device, through the at least one transceiver, a control message including the scheduling IE,
wherein a length of the bitmap field is based on a value of the extended bitmap length field, and
wherein the extended bitmap length field includes a bitmap length field having a bit size greater than 2.

18. A method, comprising:
receiving, from a first device by a second device, a control message including a scheduling information element (IE) including an extended bitmap length field and a bitmap field; and
performing signal transmission or reception, by the second device, in a block scheduled to the second device based on a bitmap of the bitmap field,
wherein a length of the bitmap field is based on a value of the extended bitmap length field, and
wherein the extended bitmap length field includes a bitmap length field having a bit size greater than 2.

19. An apparatus, comprising:
at least one transceiver; and
at least one processor connected to the at least one transceiver,
wherein the at least one processor is configured to:
receive, from a first device by a second device, through the at least one transceiver, a control message including a scheduling information element (IE) including an extended bitmap length field and a bitmap field; and
perform signal transmission or reception, by the second device, through the at least one transceiver, in a block scheduled to the second device based on a bitmap of the bitmap field,
wherein a length of the bitmap field is based on a value of the extended bitmap length field, and
wherein the extended bitmap length field includes a bitmap length field having a bit size greater than 2.

20. A processing apparatus, comprising:
at least one processor; and
at least one computer memory operably connected to the at least one processor, and based on being executed by the at least one processor, storing instructions for performing a method according to any one of claim 1 to claim 17.

21. At least one non-transitory computer-readable medium storing at least one instruction that controls to perform a method according to any one of claim 1 to claim 17 by being executed by at least one processor.
